(19) Europäisches Patentamt
European Patent Office
Office européen des brevets

(11) EP 3 464 471 B1

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **17727574.0**

(22) Anmeldetag: **31.05.2017**

(51) Int Cl.:
*C08L 83/10* (2006.01) *C08G 77/46* (2006.01)
*C08L 83/12* (2006.01) *B32B 5/12* (2006.01)
*B32B 27/28* (2006.01) *B32B 27/36* (2006.01)

(86) Internationale Anmeldenummer:
**PCT/EP2017/063122**

(87) Internationale Veröffentlichungsnummer:
**WO 2017/207611 (07.12.2017 Gazette 2017/49)**

(54) **MEHRSCHICHTVERBUNDWERKSTOFF ENTHALTEND SPEZIELLE COPOLYCARBONATE ALS MATRIXMATERIAL**

LAMINATED SHEET CONTAINING SPECIAL SILOXANE BLOCK COPOLYCARBONATES AS MATRIX MATERIAL

MATIERE COMPOSITE MULTICOUCHES CONTENANT DES COPOLYMÈRES BLOCS DE POLYDIORGANOSILOXANE-POLYCARBONATE EN TANT QUE MATERIAU MATRICIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2016 EP 16172989**

(43) Veröffentlichungstag der Anmeldung:
**10.04.2019 Patentblatt 2019/15**

(60) Teilanmeldung:
**21191448.6**

(73) Patentinhaber: **Covestro Intellectual Property GmbH & Co. KG**
**51373 Leverkusen (DE)**

(72) Erfinder:
- **MEYER, Alexander**
  **40489 Düsseldorf (DE)**
- **GRIMM, Thomas**
  **50765 Köln (DE)**
- **HORN, Klaus**
  **41540 Dormagen (DE)**
- **KUHLMANN, Timo**
  **42799 Leichlingen (DE)**

(74) Vertreter: **Levpat**
**c/o Covestro AG**
**Gebäude 4825**
**51365 Leverkusen (DE)**

(56) Entgegenhaltungen:
**WO-A1-2014/011414** **WO-A1-2014/104655**
**WO-A1-2015/114427** **US-A1- 2015 197 632**
**US-A1- 2015 197 633** **US-A1- 2015 344 687**

- **MASAYA OKAMOTO: "Impact resistance of fibrous glass reinforced plastics using polycarbonate-polydimethylsiloxane block copolymer", JOURNAL OF APPLIED POLYMER SCIENCE VOL.86, 1123-1127 (2002) ©2002WILEYPERIODICALS,INC, Bd. 86, 5. Februar 2002 (2002-02-05), - 2002, Seiten 1123-1127, XP002764024,**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Verbundwerkstoff enthaltend eine oder mehrere Faserlagen aus einem Fasermaterial, und einem Silicium haltigen Copolycarbonat als Matrixmaterial. Die Faserlage(n) ist dabei in dem Matrixmaterial eingebettet. Die vorliegende Erfindung betrifft ferner ein Verfahren zur Herstellung dieser Verbundwerkstoffe und deren Verwendung zur Herstellung von Bau- bzw. Gehäuseteilen sowie die Bau- bzw. Gehäuseteile selbst.

Faserhaltige Verbundwerkstoffe oder Mehrschichtverbundwerkstoffe mit einer auf einem thermoplastischen Kunststoff basierenden Matrix werden sowohl im Folgenden als auch im Stand der Technik als "Composite Sheets" oder "Kompositmaterialien" bezeichnet.

Solche Composite Sheets weisen gegenüber extrudierten Kunststoffplatten ohne Faserverstärkung eine höhere Festigkeit und Steifigkeit auf und reichen sogar an die Festigkeit und Steifigkeit metallischer Bleche heran bzw. können diese sogar übertreffen Die Bedeutung derartige Werkstoffe z.B. als Gehäuseteile in der Elektro- und IT- Industrie aber auch in Automobil- und Flugzeugindustrie nimmt stetig zu. Diese Verbundwerkstoffe weisen eine hohe Steifigkeit bei gleichzeitig herausragenden mechanischen Eigenschaften auf. Gegenüber herkömmlichen Werkstoffen wie Stahl weisen sie zusätzlich einen deutlichen Gewichtsvorteil auf.

Weitere Einsatzbereiche von Mehrschichtverbundwerkstoffen finden sich in Bereichen, in denen leichte und tragfähige Strukturen benötigt werden. Neben dem schon genannten Automobil- (z.B. Heckklappen, Dachmodule, Türmodule, Montageträger, Frontend- und Heckendgestaltungen, Armaturenträger usw.) und Flugzeugbau ist dies der Nutzfahrzeugbau, im Bereich der Schienenfahrzeuge und Dinge des täglichen Bedarfs, wie bspw. Kinderwagen, Skistiefel, Skateboard, Sportschuhe und dergleichen.

Ein weiterer Vorteil derartiger Polymer-gestützter Kompositmaterialien ist die durch Abwesenheit von Stahl reduzierte bzw. gänzlich ausgeschlossene Korrosionsgefahr.

Es ist bekannt, dass sich Mehrschichtverbundwerkstoffe aus Faserlagen wie Glasfaserlagen oder Kohlefaserlagen in Kombination mit thermoplastischen Materialien herstellen lassen. Als thermoplastische Substratmaterialien eignen sich eine Vielzahl von Thermoplasten, wie Polyethylen oder Polypropylen, Polyamide, beispielsweise Polyamid 6, Polyamid 6.6, Polyamid 6.12, Polycarbonate, insbesondere aromatische Polycarbonate enthaltend Bisphenol A, thermoplastische Polyurethane, Polyoxymethylen, Polyphenylenether Styrolpolymere, beispielsweise Polystyrol und Styrol enthaltende Copolymere wie Acrylnitril-Butadien-Styrol-Copolymere und Styrol-Acrylnitril-Copolymere, Polytetrafluorethylen, Polyaromaten, beispielsweise Polyphenylensulfid, Polyethersulfon, Polysulfon, Polyetheretherketon, Polyetherimid, Polyacrylat oder Polyamidimid, Polychinoxaline, Polychinoline oder Polybenzimidazole,

Polyester wie Polyethylenterephthalat oder Polybutylenterephthalat, Polyacrylnitril oder Polyvinylverbindungen wie Polyvinylchlorid, Polyvinylidenchlorid, Polyvinylester, beispielsweise Polyvinylacetat, Polyvinylalkohole, Polyvinylacetale, Polyvinylether, Polyvinyllactame, Polyvinylamine sowie Mischungen aus den genannten Polymeren.

Thermoplastische Matrixmaterialien, die u. a. Siloxan-haltige Blockcokondensate enthalten und einen hohen Anteil von Füllstoffen beinhalten sind prinzipiell bekannt. So sind in US20150197633A und US20150197632A Polymerblends, die u.a. Siloxan-haltige Blockcokondensate enthalten, in Kombination mit Glasfasern beschrieben. Allerdings können solche Zusammensetzungen nicht die hohen Werte im E-Modul erreichen. Bei einem Mehrschichtverbundwerkstoff, welcher in der vorliegenden Erfindung beschrieben wird, sind die an der Oberfläche auf die thermoplastische Matrix einwirkenden Kräfte deutlich höher und z.B. die Ausbildung von Rissen nicht vergleichbar.

In ähnlicher Weise sind gefüllte Materialien enthaltend nicht-anbindende Glasfasern und Siloxan-haltige Blockcokondensate in WO2013-170452 A1beschrieben. Auch hier besteht ein bedeutender Unterschied zu Mehrschichtverbundwerkstoffen, die im Vergleich zu Glasfaser-gefüllten Werkstoffen eine andere Struktur und anderes physikalisches Verhalten zeigen.

Auch Mehrschichtverbundwerkstoffe mit Faserlagen, die in eine thermoplastische Matrix eingebettet sind, wurden in der Literatur beschrieben. Beispielsweise beschreibt die WO2015114427 Mehrschichtverbundwerkstoffe enthaltend zusätzlich spezielle Poyletherimidfasern. Siloxan-haltige Blockcokondensate oder Informationen, die das Biegeverhalten betreffen, sind nicht beschrieben.

Die Herstellung Endlosfaserhaltiger Verbundwerkstoffe ist z.B. in EP 2886305A beschrieben. Auch der Einsatz von Polycarbonat als Matrixmaterial wird hier genannt. Blockcokondensate sind nicht beschrieben.

Mehrschichtverbundwerkstoffe aus Polycarbonat, die sich durch besonders hohe Flammwidrigkeit auszeichnen sind in WO2015052114 A1 beschrieben. Es werden unter anderem Siloaxan haltige Copolycarbonate genannt. Blockcokondensate spezieller Struktur der vorliegenden Anmeldung werden nicht beschrieben. Weiterhin sind in diesem Dokument keine Angaben zur Biegebelastung und Oberflächenqualität der Mehrschichtverbundwerkstoffe beschrieben.

Endlosfaserhaltige Verbundwerkstoffe sind in WO2012126910 beschrieben; Blockcokondensate sind jedoch nicht beschrieben.

Die Herstellung von thermoplastischen Matrixmaterialien enthaltene aus unidirektionalen Fasern aufgebaute Faserverbundwerkstofflagen — sogenannte Prepregs — sind in WO2011163365 beschrieben. Zur Herstellung der Prepregs können auch Polycarbonate eingesetzt werden, siloxanhaltige Blockcokondensate sind nicht beschrieben.

Plattenförmige Halbzeuge, die aus einer thermoplastischen Matrix bestehen und die durch ein Gewebe, Gelege oder ein unidirektionales Gewebe verstärkt sind, und u.a. Polycarbonate enthalten können, sind in US2011020572 A beschrieben.

Polyetherimid-siloxan-Blockcokondensate als Matrixmaterialien für Faserverbundwerkstoffe sind in US2014018491 beschrieben. Diese Blockcokondensate weisen jedoch eine völlig andere Struktur als die hier erfindungsgemäß beschriebenen Blockcokondensate auf und sind wesentlich teurer. MASAYA OKAMOTO offenbart GFRP mit SicoPC-Matrix in "Impact resistance of fibrous glass reinforced plastics using polycarbonate-polydimethylsiloxane block copolymer",JOURNAL OF APPLIED POLYMER SCIENCE VOL.86, 1123-1127 (2002) ©2002WILEYPERIODICALS,INC, Bd. 86, 5. Februar 2002 (2002-02-05), -2002, Seiten 1123-1127.

Die Thermoplast basierten Mehrschichtverbundwerkstoffe weisen zwar eine enorme Festigkeit, hohen E-Modul und mechanische Durchstoßfestigkeit auf, jedoch kann es bei Deformationen wie z.B. Biegen zu Zugspannungen und somit zu Rissbildung in der thermoplastischen Matrix kommen. Diese Rissbildung ist von der von außen angelegten Deformationsspannung abhängig. Bei großen Kräften kommt es zu Mikrorissen die sich ausgehend von der Oberfläche in den Mehrschichtverbundwerkstückkörper ausbreiten. Diese werden je nach Spannung und abhängig von der Dauer der anliegenden Spannung größer und breiten sich weiter aus. Derartige Risse beeinträchtigen die mechanische Festigkeit des Mehrschichtverbundwerkstoffes bzw. daraus hergestellter Teile. Ferner können sie zu einer höheren Oberflächenrauigkeit führen, was mit einer Abnahme der Oberflächenqualität verbunden ist. Diese Oberflächenprobleme können auch zu Problemen im Lackierprozess bei Oberflächenveredelung des Mehrschichtverbundwerkstoffs führen. Durch in entsprechende Oberflächendefekte eindringendes Lacklösemittel kann der Lackfilm beim späteren Härten z.B. durch Blasenbildung beschädigt werden. Derartige Oberflächendefekte und Rissbildungen in der thermoplastischen Matrix sind deshalb unerwünscht.

Darüber hinaus ist eine gute Anhaftung der jeweiligen Faser an die thermoplastische Matrix vorteilhaft. Ist die Anhaftung nicht ausreichend, kann es beim Anliegen von äußeren Spannungen infolge von dynamischen Stoß- oder Zugeinwirkungen zum Zusammenbruch des Verbundes von thermoplastischer Matrix und Fasergewebe kommen. Dies kann sich dann durch eine vermehrte Hohlraumbildung im Verbundwerkstoff äußern.

Daher bestand die Aufgabe einen Mehrschichtverbundwerkstoff bereit zu stellen, der zu einer geringeren Rissbildung bei Vorliegen von Deformationsspannungen neigt. Ferner soll die Anhaftung der thermoplastischen Matrix an das Fasergewebe hoch sein.

Überraschend konnte gezeigt werden, dass sich ein Mehrschichtverbundwerkstoff, welcher aus mehreren Faserverbundwerkstofflagen aufgebaut ist und Endlosglas- oder Endlos-Carbonfasern oder Glasfasern oder Carbonfasern jeweils als Gewebe oder Gewirke sowie als thermoplastische Matrix spezielle Siloxan-haltige Blockcokondensate enthält eine signifikant geringere Rissbildungsneigung gegenüber herkömmlichen Mehrschichtverbundwerkstoffen aufweist.

Gegenstand der vorliegenden Erfindung ist daher ein Fasererbundwerkstoff, umfassend mindestens eine Lage Fasermaterial, wobei die Fasermaterialien ausgewählt sind aus Glasfasern und oder Kohlefasern als Endlosfasern oder als Gewebe und Gewirke, eingebettet in einen auf Siloxanhaltigen Blockcokondensat (im Folgenden auch kurz "SiCoPC", Polysiloxan-Blockcokondensat oder "Matrixmaterial" genannt) basierenden Thermoplasten enthaltend eine Struktureinheit (1)

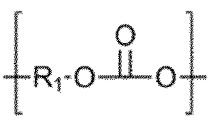
(1),

wobei $R_1$ ein divalenter substituierter oder unsubstituierter aromatischer Rest, ein divalenter linearer oder cyclischer aliphatischer Rest bedeutet, oder die Struktureinheit (1) eine Mischung aus Bausteinen ist, wobei $R_1$ ein divalenter substituierter oder unsubstituierter aromatischer Rest und bzw. $R_1$ ein divalenter linearer oder cyclischer aliphatischer Rest ist,

und einen Siloxanblock, der sich von einem Hydroxyaryl-terminierten Polysiloxan mit der folgenden Struktur (10) ableitet

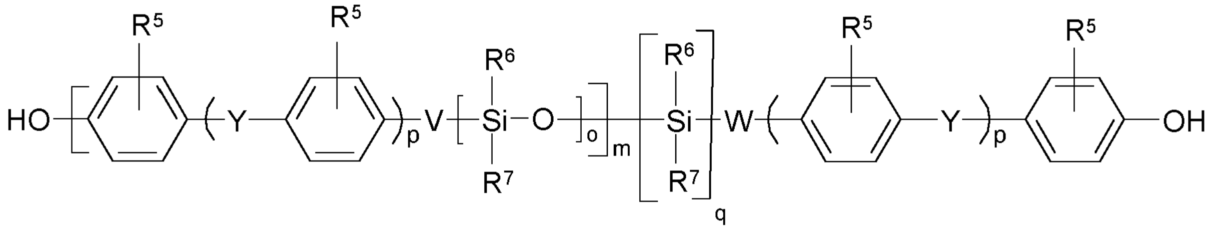

(10),

wobei

$R^5$ für Wasserstoff oder Methyl steht,

$R^6$ und $R^7$ unabhängig voneinander für Methyl stehen,

V für eine Einfachbindung, O, C1 bis C6-Alkyl oder C1 bis C6-Alkoxy steht,

W für eine Einfachbindung, C1 bis C6-Alkylen, C2- bis C5-Alkyliden oder C1 bis C6-Alkoxy steht,

Y für eine Einfachbindung, -CO-, -O-, C1- bis C6-Alkylen, C2 bis C5-Alkyliden, für einen C5 bis C6-Cycloalkylidenrest, der ein- oder mehrfach mit C1 bis C4-Alkyl substituiert sein kann, oder für C6 bis C12-Arylen, welches mit einem weiteren aromatischen Ring enthaltend Heteroatome kondensiert sein kann, steht,

m für eine durchschnittliche Anzahl von Wiederholungseinheiten von 2 bis 6 steht,

o für eine durchschnittliche Anzahl von Wiederholungseinheiten von 10 bis 400 steht, und

p und q jeweils für 0 oder 1 stehen,

wobei der Gehalt an Siloxanblöcken im Siloxan-haltigen Blockcokondensat 0,5 bis 40 Gew.-%, bezogen auf die eingesetzten Siloxanblöcke und Polycarbonatblöcke, beträgt.

Weiterer Gegenstand der vorliegenden Erfindung ist ein Mehrschichtverbundwerkstoff, der mindestens zwei, bevorzugt mindestens drei übereinander liegende Lagen Faserverbundwerkstoff umfasst, wobei im Falle von drei Verbundwerkstofflagen diese relativ zueinander definiert werden als zwei außenliegende Lagen Faserverbundwerkstoff und mindestens eine innenliegende Lage Faserverbundwerkstoff,
wobei jede dieser mindestens zwei Lagen Faserverbundwerkstoff, Fasermaterial enthält, das in einem auf Siloxanhaltigen Blockcokondensat basierenden Thermoplasten eingebettet ist, wobei im Falle von Endlosfasern als Fasermaterial diese in der jeweiligen Lage unidirektional ausgerichtet sind.

Im Falle von Endlosfasern als Fasermaterial können die innenliegenden Lagen Faserverbundwerkstoff im Wesentlichen gleich orientiert und ihre Orientierung relativ zu den außenliegenden Lagen Faserverbundwerkstoff um 30° bis 90° rotiert sein, wobei die Orientierung einer Lage Faserverbundwerkstoff durch die Orientierung der darin enthaltenen, unidirektional ausgerichteten Fasern bestimmt wird.

In einer bevorzugten Ausführungsform sind die Lagen alternierend angeordnet. Hierbei liegen die äußeren Lagen in einer 0° Orientierung vor. Als besonders praxisgerecht hat es sich erwiesen, wenn die innenliegenden Lagen Faserverbundwerkstoff gleich orientiert sind und ihre Orientierung relativ zu den außenliegenden Lagen Faserverbundwerkstoff um 90° rotiert ist. Es ist aber auch möglich, die innenliegenden Lagen relativ zu den außenliegenden Lagen um 30°, 40°, 50°, 60°, 70° oder 80° zu rotieren. Dabei kann die Orientierung in jedem Fall um ±5°, bevorzugt um ±3°, besonders bevorzugt um ±1° von den genannten Richtwerten abweichen. "Alternierend" heißt, dass die innenliegenden Lagen jeweils um einen Winkel von 90 ° oder einem Winkel von 30° bis 90° abwechselnd angeordnet sind. Die äußeren Lagen liegen in einer 0° Orientierung jeweils vor. Die Winkel können pro Lage jeweils von 30° bis 90° variiert werden.

Eine weitere bevorzugte Ausführungsform ist, dass mindestens ein Teil der Lagen die gleiche Orientierung aufweisen und mindestens ein anderer Teil der Lagen um 30° bis 90° rotiert ist. Hierbei liegen die äußeren lagen in einer 0° Orientierung vor.

Eine weitere bevorzugte Ausführungsform ist, dass die innenliegenden Lagen die gleiche Orientierung aufweisen und ihre Orientierung relativ zu den außenliegenden Lagen Faserverbundwerkstoff um 30° bis 90° rotiert ist und die äußeren Lagen dazu in einer 0° Orientierung vorliegen.

Diese bevorzugten Ausführungsformen sind insbesondere für Endlosfasern geeignet.

Im Falle von Geweben erfolgt ein Stapeln der Lagen Faserverbundwerkstoffe abwechselnd in Kettrichtung (0°) und Schussrichtung (90°) bzw. den oben angegebenen Winkeln.

In einer besonderen Ausführungsform umfasst der Mehrschichtverbundwerkstoff sechs, vorzugsweise fünf, insbesondere vier, besonders bevorzugt drei, innenliegende Faserverbundwerkstofflagen. Der erfindungsgemäße Mehrschichtverbundwerkstoff kann aber auch zwei oder mehr als sechs, beispielsweise sieben, acht, neun, zehn oder mehr als zehn innenliegende Faserverbundwerkstofflagen umfassen.

Die Zahl der Faserlagen ist in einem Faserverbundwerkstoff ist grundsätzlich nicht beschränkt. Es können daher auch zwei oder mehr Faserlagen übereinander angeordnet werden. Zwei übereinanderliegende Faserlagen können dabei jeweils einzeln in das Matrixmaterial eingebettet sein, so dass sie jeweils beidseitig von dem Matrixmaterial umgeben sind. Weiterhin können zwei oder mehr Faserlagen auch unmittelbar übereinander liegen, so dass ihre Gesamtheit von dem Matrixmaterial umgeben wird. In diesem Fall können diese zwei oder mehr Faserlagen auch als eine dicke Faserlage angesehen werden. Bei einer Ausführungsform des Faserverbundwerkstoffs ist die Faserlage als unidirektionale Faserlage, als Gewebeoder Gelegelage, als Gestrick, Gewirk oder Geflecht, oder als Langfaser in Form von Wirrfasermatten oder Vliesen oder als Kombination daraus ausgebildet.

Die erfindungsgemäßen Mehrschichtverbundwerkstoffe mit Polysiloxan-Blockcokondensaten als Matrixmaterial weisen eine hohe Resistenz gegen Rissbildung bei mechanischer Belastung auf.

Derartige Materialien können ein metallisches Aussehen, metallischen Klang und metallische Haptik und metallähnliche mechanische Eigenschaften aufweisen. Die erfindungsgemäßen Mehrschichtverbundwerkstoffe weisen ferner den Vorteil auf, dass sie sich kostengünstig herstellen lassen und durch den darin verwendeten Kunststoff äußerst leichtgewichtig sind. Zudem zeichnen sich die erfindungsgemäßen Mehrschichtverbundwerkstoffe durch eine gute Lackierbarkeit und Hinterspritzbarkeit aus. Vorteilhaft an den erfindungsgemäßen Mehrschichtverbundwerkstoffen ist ferner, dass die Gestaltung, beispielsweise eines Gehäuseteils, durch die Thermoformbarkeit der Mehrschichtverbundwerkstoffe besonders einfach und flexibel erfolgen kann.

Der chemische Aufbau der Fasern (Fasermaterial) des Fasermaterials kann von der unterschiedlichsten Art sein. Vorzugsweise besitzen die Fasermaterialien einen höheren Erweichungs- bzw. Schmelzpunkt als das jeweils vorliegende thermoplastische Matrixmaterial. Beispiele für Fasermaterialien sind anorganische Materialien wie silikatische und nichtsilikatische Gläser der verschiedensten Art, Kohlenstoff, Basalt, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, flüssigkristalline Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Basalt, Liquid-crystal- Polymere, Polyphenylensulfide, Polyetherketone, Polyetheretherketone und Polyetherimide. Besonders bevorzugte Fasermaterialien sind Glasfasern oder Kohlefasern, als Endlosfasern sowie als Gewebe und Gewirke, besonders bevorzugt sind Endlosglasfasern oder Endloscarbonfasern. Die Endlosfasern erstrecken sich dabei insbesondere im Wesentlichen über die gesamte Länge der Lage Faserverbundwerkstoff.

Als Fasermaterial sind Endlosglasfasern, Endloscarbonfasern sowie gewebeartige Fasern oder Gewirke geeignet. Unter einer Lage Fasermaterial (auch als Faserlage bezeichnet) wird eine flächige Lage verstanden, welche durch im Wesentlichen in einer Fläche angeordnete Fasern gebildet wird. Die Fasern können durch ihre Lage zueinander miteinander verbunden sein, beispielsweise durch eine gewebeartige Anordnung der Fasern. Weiterhin kann die Faserlage auch einen Anteil Harz oder einen anderen Kleber aufweisen, um die Fasern miteinander zu verbinden. Die Fasern können alternativ auch unverbunden sein. Hierunter wird verstanden, dass die Fasern ohne Aufwendung einer nennenswerten Kraft voneinander gelöst werden können. Die Faserlage kann auch eine Kombination von verbundenen und unverbundenen Fasern aufweisen. Mindestens eine Seite der Faserlage ist in SiCoPC als Matrixmaterial eingebettet. Hierunter wird verstanden, dass die Faserlage zumindest einseitig, vorzugsweise beidseitig von dem SiCoPC umgeben ist. Der äußere Rand des Faserverbundwerkstoffes bzw. des Mehrschichtverbundwerkstoffes wird durch die SiCoPC-Matrix gebildet,

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Faserverbundwerkstoff. Der Begriff Endlosfaser leitet sich davon ab, dass diese Fasern auf einer Rolle aufgewickelt vorliegen und während der Herstellung der einzelnen Faserverbundwerkstofflagen abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Faserverbundwerkstofflage übereinstimmt.

Unidirektional im Sinne der Erfindung bedeutet, dass die Endlosfasern im Wesentlichen unidirektional ausgerichtet sind, also der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Gemäß einer besonderen Ausführungsform der Erfindung sind alle Faserverbundwerkstofflagen des Mehrschichtverbundwerkstoffs flächig miteinander verbunden, wobei das Fasermaterial innerhalb der jeweiligen Lage unidirektional ausgerichtet sind und im Matrixmaterial eingebettet sind. Optional können sich in dieser Ausführungsform weitere Materiallagen wie z.B. Veredelungsschichten wie z.B. Lackschichten, üblicherweise auf Basis von Urethanbasierten und Acrylat-basierten Lacksystemen, einschichtig oder mehrschichtig, die thermisch oder mittels UV-Strahlung ausgehärtet werden können (ggf. können die Oberflächen vor Veredelung entsprechend vorbehandelt, aktiviert z.B. mittels Plasmabehandlung oder Beflammung - bzw. gereinigt werden) zwischen den Lagen der Faserverbundwerkstoff befinden.

Neben den Lagen Faserverbundwerkstoff kann der erfindungsgemäße Mehrschichtverbundwerkstoff auch noch eine oder mehrere weitere Lagen enthalten. Beispielhaft seien hier weitere Lagen aus Kunststoff, der gleich oder verschieden von der in den Lagen Faserverbundwerkstoff verwendeten Kunststoffmatrix sein kann, genannt. Diese Kunststofflagen können insbesondere auch Füllstoffe, die von den erfindungsgemäß vorgesehenen Fasermaterialien verschieden sind, enthalten. Ferner können auch Klebstoff-, Gewebe-, Vlies- oder Oberflächenvergütungslagen, beispielsweise Lackschichten im erfindungsgemäßen Mehrschichtverbundwerkstoff enthalten sein. Diese weiteren Lagen können zwischen innen- und außenliegenden Lagen Faserverbundwerkstoff, zwischen mehreren innenliegenden Lagen Faserverbundwerkstoff und/oder auf einer oder beiden der außenliegenden Lagen Faserverbundwerkstoff enthalten sein. Vorzugsweise sind die außenliegenden und die mindestens eine innenliegende Lage Faserverbundwerkstoff jedoch derart miteinander verbunden, dass keine weiteren Lagen dazwischenliegen.

Der Mehrschichtverbundwerkstoff kann auch ausschließlich aus erfindungsgemäßen Faserverbundwerkstofflagen, welche innerhalb der jeweiligen Lage unidirektional ausgerichtet sind und in einem auf Polycarbonat basierenden Kunststoff eingebettet sind, bestehen, wobei optional noch auf einer oder beiden der außenliegenden Lagen Faserverbundwerkstoff eine oder mehrere Oberflächenvergütungslagen, beispielsweise Lackschichten, enthalten sein können.

Die einzelnen Lagen Faserverbundwerkstoff können im Wesentlichen gleich oder unterschiedlich aufgebaut und/oder orientiert sein.

Unter einem im Wesentlichen gleichen Aufbau der Faserverbundwerkstofflagen wird im Rahmen der Erfindung verstanden, dass mindestens ein Merkmal aus der Gruppe chemische Zusammensetzung, Faservolumengehalt und Schichtdicke gleich ist.

Unter chemischer Zusammensetzung wird die chemische Zusammensetzung der Kunststoffmatrix des Faserverbundwerkstoffs und/oder die chemische Zusammensetzung des Fasermaterials wie Endlosfasern verstanden.

Gemäß einer bevorzugten Ausführungsform der Erfindung sind die außenliegenden Lagen Faserverbundwerkstoff in Bezug auf ihre Zusammensetzung, ihren Faservolumengehalt und ihre Schichtdicke im Wesentlichen gleich aufgebaut.

Gemäß einer bevorzugten Ausführungsform der Erfindung weist der Mehrschichtverbundwerkstoff eine Gesamtdicke von 0,5 bis 2 mm, vorzugsweise 0,8 bis 1,8 mm, insbesondere 0,9 bis 1,2 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden Lagen Faserverbundwerkstoff eine Gesamtdicke von 200 μm bis 1200 μm, bevorzugt 400 μm bis 1000 μm, besonders bevorzugt 500 μm bis 750 μm aufweist.

Vorteilhaft im Rahmen der Erfindung ist es ferner, wenn die Dicke jeder einzelnen der beiden außenliegenden Lagen Faserverbundwerkstoff jeweils 100 bis 250 μm, bevorzugt, 120 μm bis 230 μm, besonders bevorzugt 130 μm bis 180 μm beträgt.

Gemäß einer besonderen Ausführungsform der Erfindung weist eine Faserverbundwerkstofflage einen Faservolumengehalt von $\geq$ 30 Vol.-% und $\leq$ 60 Vol.-%, vorzugsweise $\geq$ 35 Vol.-% und $\leq$ 55 Vol.-%, besonders bevorzugt von $\geq$ 37 Vol.-% und $\leq$ 52 Vol.-% auf. Beträgt der Faservolumengehalt weniger als 30 Vol.-%, so sind die mechanischen Eigenschaften des resultierenden Faserverbundwerkstoffs bei punktueller Belastung oftmals nicht optimal, d.h. der Faserverbundwerkstoff kann einer punktueller Belastung nicht genügend standhalten und teils sogar durchstoßen werden. Ein Faservolumengehalt von über 60 Vol.-% führt ebenfalls zu einer Verschlechterung der mechanischen Eigenschaften des Faserverbundwerkstoffs. Ohne an wissenschaftliche Theorien gebunden sein zu wollen, scheint dies darauf zurückführbar zu sein, dass die Fasern bei der Imprägnierung bei derartig hohen Faservolumengehalten nicht mehr ausreichend benetzt werden können, was zu einer Zunahme an Lufteinschlüssen und zu einem vermehrten Auftreten von Oberflächendefekten im Faserverbundwerkstoff führt.

Bei einer Ausführungsform des Mehrschichtverbundwerkstoffs liegt der Volumengehalt des Fasermaterials am Gesamtvolumen des Mehrschichtverbundwerkstoffs im Bereich von 30 bis 60 Vol.-%, bevorzugt im Bereich 40 bis 55 Vol.-%.

Gemäß einer Ausführungsform der Erfindung weisen die außenliegenden Lagen Faserverbundwerkstoff einen Faservolumengehalt von höchstens 50 Vol.%, vorzugsweise höchstens 45 Vol.-%, insbesondere höchstens 42 Vol.-% auf.

Gemäß einer besonderen Ausführungsform der Erfindung weisen die außenliegenden Lagen Faserverbundwerkstoff einen Faservolumengehalt von mindestens 30 Vol.-%, vorzugsweise mindestens 35 Vol.-%, insbesondere mindestens 37 Vol.-% auf.

Diese Ober-und Untergrenzen für den Faservolumengehalt sind mit besonders vorteilhaften mechanischen Eigenschaften verbunden, wie weiter oben beschrieben.

Gemäß einer weiteren besonderen Ausführungsform der Erfindung weisen die außenliegenden Lagen Faserverbundwerkstoff einen geringeren Volumengehalt an Fasern, bezogen auf das Gesamtvolumen der Lage Faserverbundwerkstoff, auf als die mindestens eine innenliegende Lage Faserverbundwerkstoff.

Die innenliegenden Lagen Faserverbundwerkstoff können einen Faservolumengehalt von 40 bis 60 Vol.%, bevorzugt 45 bis 55 Vol.-%, besonders bevorzugt 48 bis 52 Vol.-% bezogen auf das Gesamtvolumen der Lage Faserverbundwerkstoff aufweisen.

Unter Vol.-% wird hier der Volumenanteil (% v/v) bezogen auf das Gesamtvolumen der Lage Faserverbundwerkstoff verstanden.

Bevorzugt weisen die mindestens drei Lagen Faserverbundwerkstoff des erfindungsgemäßen Mehrschichtverbundwerkstoffs im Wesentlichen keine Hohlräume, insbesondere im Wesentlichen keine Lufteinschlüsse, auf.

Im Wesentlichen keine Hohlräume bedeutet gemäß einer Ausführungsform, dass der Hohlraumgehalt der mindestens drei Lagen Faserverbundwerkstoff des erfindungsgemäßen Mehrschichtverbundwerkstoffs unter 2 Vol.-%, insbesondere unter 1 Vol.-%, besonders bevorzugt unter 0,5 Vol.-%, beträgt.

Die Ermittlung des Hohlraumgehalts einer Faserverbundwerkstofflage oder des Mehrschichtverbundwerkstoffs kann auf unterschiedlichen Wegen erfolgen, welche als allgemein anerkannt betrachtet werden. Beispielsweise kann der Hohlraumgehalt eines Prüfkörpers durch den Harz-Veraschungstest erfolgen, bei dem ein Probekörper in einem Ofen beispielsweise einer Temperatur von 600°C für 3 Stunden ausgesetzt wird, um das Harz, welches die Fasern in dem Probekörper umschließt zu verbrennen. Die Masse der derart freigelegten Fasern kann dann ermittelt werden um in einem weiteren kalkulatorischen Schritt auf den Hohlraumgehalt des Probekörpers zu schließen. Ein derartiger Harz-Veraschungstest kann in Anlehnung an die ASTM D 2584-08 durchgeführt werden, um die Einzelgewichte der Fasern und der Polymermatrix zu bestimmen. Hieraus kann in einem weiteren Schritt der Hohlraumgehalt des Probekörpers ermittelt werden, indem die nachfolgende Gleichung 1 genutzt wird:

$$V f = 100 * (\rho t - \rho c) / \rho t \qquad \text{(Gleichung 1)}$$

wobei

Vf den Hohlraumgehalt der Probe in [%];
ρc die Dichte des Probekörpers, beispielsweise ermittelt durch Flüssig- oder Gaspyknometrie;
ρt die theoretische Dichte des Probekörpers ermittelt nach folgender Gleichung 2

$$\rho t = 1 / [Wf / \rho f + Wm / \rho m] \qquad \text{(Gleichung 2)}$$

ρm die Dichte der Polymermatrix (beispielsweise bei einer entsprechenden Kristallinität);
ρf die Dichte der verwendeten Fasern;
Wf der Gewichtsanteil der verwendeten Fasern und
Wm der Gewichtsanteil der Polymermatrix; sind.

Alternativ kann der Hohlraumgehalt durch chemisches Auflösen der Polymermatrix aus dem Probekörper heraus in Anlehnung an ASTM D 3171-09 erfolgen. Der Harz-Veraschungstest sowie die chemische Auflösungsmethode sind eher für Glasfasern geeignet, welche im Allgemeinen gegen schmelzen oder chemischer Behandlung inert sind. Weitere Methoden für sensitivere Fasern sind die indirekte Berechnung des Hohlraumgehalts über die Dichten des Polymers, der Fasern sowie des Probekörpers nach ASTM D 2734-09 (Methode A), wobei die Dichten nach ASTM D792-08 (Methode A) bestimmt werden können. Des Weiteren können auch bildverarbeitende Programme, Rasterschablonen oder das Auszählen der Fehlstellen zur Auswertung des Hohlraumgehalts einer Bildaufnahme, welche durch konventionelle Mikroskopie ermittelt wurde, herangezogen werden.

Ein weiterer Weg zur Bestimmung des Hohlraumgehalts ist die Dickendifferenzmethode, welche in der Ermittlung der Schichtdickendifferenz zwischen theoretischer Bauteildicke und der tatsächlichen Bauteildicke bei bekannten Flächengewichten und Dichten von Polymer sowie Faser besteht. Bei der Berechnung der theoretischen Bauteildicken wird davon ausgegangen, dass keine Hohlräume in dem Aufbau vorhanden sind und eine vollständige Benetzung der Fasern mit Polymer vorliegt. Der Bezug der Dickendifferenz auf die tatsächliche Bauteildicke ergibt den prozentualen

Hohlraumgehalt. Die Messung der Dicken kann hierbei beispielsweise mit einer Bügelmessschraube erfolgen. Fehlerminimierte Ergebnisse lassen sich bei dieser Methode bevorzugt durch die Ermittlung des Hohlraumgehalts an Bauteilen bestehend aus mehreren Einzelschichten, bevorzugt mehr als 4 Schichten, besonders bevorzugt mehr als 6 Schichten und ganz besonders bevorzugt mehr als 8 Schichten, bestimmen.

Während all die oben beschriebenen Verfahren bei Mittesten eines entsprechenden Standards zu vergleichbaren Ergebnissen führen, wurden die Hohlraumgehalte, wie hier beschrieben, mittels der Dickendifferenzmethode wie in den Beispielen angegeben durchgeführt

Ganz besonders bevorzugt weisen die drei Lagen Faserverbundwerkstoff des erfindungsgemäßen Mehrschichtverbundwerkstoffs keine Hohlräume, insbesondere keine Lufteinschlüsse, auf.

Siloxan basierte Blockcopkondensateim Sinne der vorliegenden Erfindung sind Polysiloxan-Polycarbonat-Blockcokondensate,. Derartige Polysiloxan-Polycarbonat-Blockcokondensate weisen gute Eigenschaften bezüglich der Tieftemperaturschlagzähigkeit bzw. Tieftemperaturkerbschlagzähigkeit, der Chemikalienbeständigkeit und Flammwidrigkeit auf.

Die Siloxan-haltigen Blockcokondensate betreffen Blockcokondensate, die folgende Struktureinheiten enthalten,

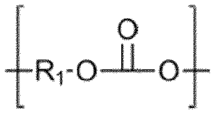

(1)

wobei R1 ein divalenter substituierter oder unsubstituierter aromatischer Rest, ein divalenter linearer oder cyclischer aliphatischer Rest

oder die Struktureinheit (1) eine Mischung aus Bausteinen ist, wobei R1 ein divalenter substituierter oder unsubstituierter aromatischer Rest bzw. R1 ein divalenter linearer oder cyclischer aliphatischer Rest ist Der Anteil an aromatischen R1 Resten beträgt 60 — 100 Gew.% und der Anteil an aliphatischen Resten 0 — 40 Gew.%, bezogen auf die Summe eingesetzten Diphenole der Formel (3) in Gew.%,

und einen Siloxanblock, der sich von einem Hydroxyaryl-terminierten Polysiloxan mit der folgenden Struktur (10) ableitet

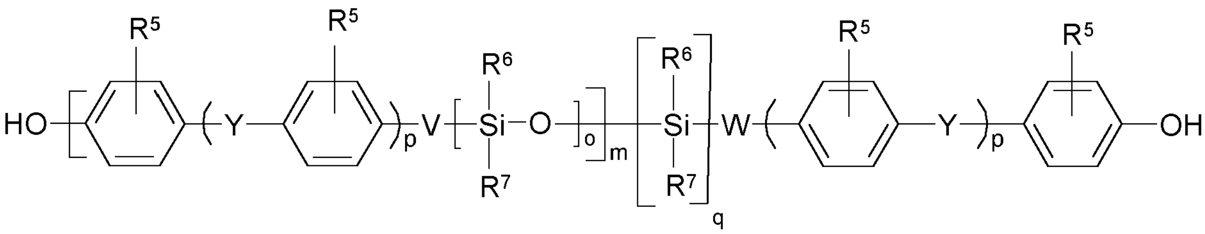

(10),

wobei

$R^5$ für Wasserstoff oder Methyl steht,

$R^6$ und $R^7$ unabhängig voneinander für Methyl stehen,

V für eine Einfachbindung, O, C1 bis C6-Alkyl oder C1 bis C6-Alkoxy steht,

W für eine Einfachbindung, C1 bis C6-Alkylen, C2- bis C5-Alkyliden oder C1 bis C6-Alkoxy steht,

Y für eine Einfachbindung, -CO-, -O-, C1- bis C6-Alkylen, C2 bis C5-Alkyliden, für einen C5 bis C6-Cycloalkylidenrest, der ein- oder mehrfach mit C1 bis C4-Alkyl substituiert sein kann, oder für C6 bis C12-Arylen, welches mit einem weiteren aromatischen Ring enthaltend Heteroatome kondensiert sein kann, steht,

m für eine durchschnittliche Anzahl von Wiederholungseinheiten von 2 bis 6 steht,

o für eine durchschnittliche Anzahl von Wiederholungseinheiten von 10 bis 400 steht, und

p und q jeweils für 0 oder 1 stehen,

wobei der Gehalt an Siloxanblöcken im Siloxan-haltigen Blockcokondensat 0,5 bis 40 Gew.-%, bezogen auf die eingesetzten Siloxanblöcke und Polycarbonatblöcke, beträgt.

In der Struktureinheit (1) ist R1 bevorzugt von Dihydroxyarylverbindungen abgeleitet, welche der Formel (3) entsprechen:

HO—Z—OH (3)

in welcher
Z ein aromatischer Rest mit 6 bis 30 C-Atomen ist, der einen oder mehrere aromatische Kerne enthalten kann, substituiert sein kann und aliphatische Reste bzw. Alkylaryle oder Heteroatome als Brückenglieder enthalten kann.

Bevorzugt steht Z in Formel (3) für einen Rest der Formel (3a)

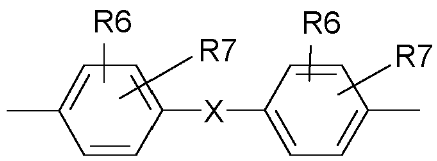

(3a)

in der

R6 und R7 unabhängig voneinander für H, C1-C18-Alkyl, C1-C18-Alkoxy, Halogen wie Cl oder Br oder für jeweils gegebenenfalls substituiertes Aryl- oder Aralkyl, bevorzugt unabhängig voneinander für H oder C1-C12-Alkyl, besonders bevorzugt für H oder C1-C8-Alkyl und ganz besonders bevorzugt unabbhängig voneinander für H oder Methyl stehen, und

X für —CO—, —O—, —S—, C1- bis C6-Alkylen, C2- bis C5-Alkyliden, C6 bis C10-Cycloalkyliden oder für C6- bis C12-Arylen, welches gegebenenfalls mit weiteren Heteroatome enthaltenden aromatischen Ringen kondensiert sein kann, steht.

Bevorzugt steht X für C1 bis C5-Alkylen, C2 bis C5-Alkyliden, C6 bis C9-Cyclohexyliden —O—, —SO—, —CO—, —S—, —SO2—, besonders bevorzugt für Isopropyliden, 3,3,5-trimethylcyclohexyliden oder Sauerstoff, insbesondere für Isopropyliden.

Für die Herstellung der erfindungsgemässen SiCoPCs geeignete Diphenole der Formel (3) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, [alpha],[alpha]'-Bis-(hydroxyphenyl)-diisopropylbenzole, sowie deren alkylierte, kernalkylierte und kernhalogenierte Verbindungen.

Ferner bevorzugte Diphenole der Formel (3) sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol. 1,1-Bis-(4-hydroxyphenyl)-cyclohexan und 1,1-Bis-(4-hydroxyphenyl)-3,3,5-trimethylcyclohexan.

Besonders bevorzugte Diphenole der Formel (3) sind 2,2-Bis-(4-hydroxyphenyl)-propan (BPA), Hydrochinon, 1,1-Bis-(4-hydroxyphenyl)-3,3,5-trimethylcyclohexan und 2,2-Bis-(3-methyl, 4-hydroxyphenyl)-propan.

Diese und weitere geeignete Diphenole sind kommerziell erhältlich und z. B. in "H. Schnell, Chemistry and Physics of Polycarbonates, Interscience Publishers, New York 1964, S. 28 ff; S. 102 ff" , und in "D. G. Legrand, J. T. Bendler, Handbook of Polycarbonate Science and Technology, Marcel Dekker New York 2000, S. 72 ff." beschrieben.

Erfindungsgemäß sind die Siloxanblöcke Hydroxyaryl-terminierte Polysiloxane und entsprechen der Formel (10)

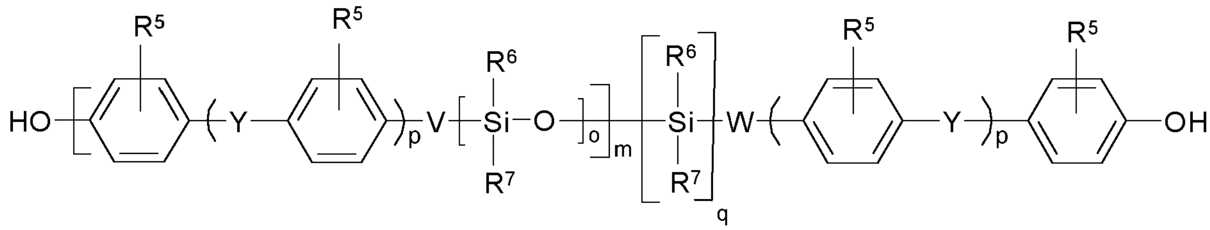

(10)

In der allgemeinen Formel (10) steht $R^5$ vorzugsweise fürWasserstoff oder Methyl, besonders bevorzugt für Wasserstoff.

$R^6$ und $R^7$ (entsprechen R2) stehen vorzugsweise für Methyl.

Y steht vorzugsweise für eine Einfachbindung, -CO-, -O-, $C_1$- bis $C_5$-Alkylen, $C_2$ bis $C_5$-Alkyliden oder für einen $C_5$ bis $C_6$-Cycloalkylidenrest, der ein- oder mehrfach mit $C_1$ bis $C_4$-Alkyl substituiert sein kann, besonders bevorzugt für eine Einfachbindung, -O-, Isopropyliden oder für einen $C_5$ bis $C_6$-Cycloalkyliden- rest, der ein- oder mehrfach mit $C_1$ bis $C_4$-Alkyl substituiert sein kann, und insbesondere für Isopropyliden oder.

V steht für eine Einfachbindung, Sauerstoff, C1-C6 Alkylen, C2- bis C5-Alkyliden oder C1-C6 Alkoxy, bevorzugt für eine Einfachbindung, C3Alkylen oder C3 Alkoxy.

W steht für eine Einfachbindung, S, C1 bis C6-Alkylen, C2- bis C5-Alkyliden oder C1 bis C6-Alkoxy, bevorzugt für eine Einfachbindung, C3 Alkylen oder C3 Alkoxy p und q stehen unabhängig voneinander jeweils für 0 oder 1.

o steht für eine durchschnittliche Anzahl von Wiederholungseinheiten von 10 bis 400, bevorzugt 10 bis 100, besonders bevorzugt 20 bis 60.

m steht für eine durchschnittliche Anzahl von Wiederholungseinheiten von 2 bis 6, bevorzugt 2 bis 5.

Das Produkt von o mal m ist vorzugsweise eine Zahl zwischen 12 und 400, besonders bevorzugt 15 und 200.

Das Molekulargewicht der Siloxanblöcke beträgt 3000 bis 20.000 g/mol, bevorzugt 4000 — 15.000 g/mol, bestimmt mittels Gelpermeationschromatographie (GPC) und Polycarbonat aus BisphenolA als Diphenol als Standard und.

Die Herstellung der Siloxanblöcke ist prinzipiell bekannt und kann nach Verfahren wie beispielsweise in US20130267665 beschrieben hergestellt werden.

Die Herstellung von Polycarbonaten ist ebenfalls bekannt. Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Bevorzugte Herstellungsweisen für Polycarbonate, sind das bekannte Grenzflächenverfahren und das bekannte Schmelzumesterungsverfahren (vgl. z. B. WO 2004/063249 A1, WO 2001/05866 A1, WO 2000/105867, US-A 5,340,905, US 5,097,002, US-A 5,717,057).

Der Gehalt an Siloxanblöcken im SiCoPC beträgt 0,5, bis 40 Gew.-%, bevorzugt 1 bis 20 Gew.-%, insbesondere bevorzugt 2 bis 15 % und ganz besonders bevorzugt 2 bis 10 Gew.-% jeweils bezogen auf die eingesetzten Siloxanblöcke und Polycarbonatblöcke eingesetzt. Entsprechend beträgt der Anteil der Polycarbonatblöcke im Blockcokondensat 60 bis kleiner 100 (bevorzugt 99,5) Gew,%, bevorzugt 99 bis 80 Gew.%, insbesondere bevorzugt 98 bis 85 Gew.% und ganz besonders bevorzugt 98 bis 90 Gew.%.

Die oben genannten Siloxanblöcke werden bevorzugt mit Polycarbonate mit Molekulargewichten von 15.000 bis 27.000 insbesondere bevorzugt von 17.000 bis 27.000 und insbesondere bevorzugt von 18.000 bis 26.500 g/mol (gemessen mittels GPC mit BPA-Polycarbonat als Standard) umgesetzt.

Die Diphenole zur Herstellung der Polycarbonate sind die oben genannten Struktureinheiten (3).

Dabei werden die einzelnen Komponenten (Siloxan-Block und Polycarbonat-Block) nach dem Reaktivextrusionsverfahren oder alternativ die Siloxanblöcke mit Diphenolen der Formel (3) mit Phosger oder Diarylcorbonaten nach dem bekannten Phasengrenzflächenverfahren umgesetzt. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen- Die Umsetzung von Polyorganosiloxanen im Phasengranzflächenverfharen ist z.B. in US3821325 beschrieben.

Die Herstellung der SiCoPCs kann in einem Reaktivextrusionsverfahren wie es beispielsweise in WO 2015/052110 beschrieben ist, erfolgen.

Bei den dabei zu verwendenden Aggregaten kann es sich um einen Einwellenreaktor, um einen Doppelwellenreaktor, einen Planetwalzenextruder oder Ringextruder handeln. Ferner kann es sich um Polymerkneter mit hohem Volumen handeln.

Bevorzugt wird das Verfahren in einer Reaktorkombination bestehend aus einem Vorreaktor und einem Hochviskosreaktor bei Temperaturen von 280 °C bis 400 °C, vorzugsweise von 300 °C bis 390 °C, weiter bevorzugt von 320 °C bis 380 °C (vorliegend im Hochviskosreaktor) und ganz besonders bevorzugt von 330 °C bis 370 °C und Drücken von 0,001 mbar bis 50 mbar bevorzugt 0,005 mbar bis 40 mbar insbesondere bevorzugt 0,02 bis 30 mbar und ganz besonders bevorzugt 0,03 bis 5 mbar (vorliegend im Hochviskosreaktor) bevorzugt in Gegenwart eines Katalysators, das dadurch gekennzeichnet ist, dass man Polycarbonate mit Molekulargewichten von 15.000 bis 27.000 insbesondere bevorzugt von 17.000 bis 27.000 und insbesondere bevorzugt von 18.000 bis 26.500 g/mol (gemessen mittels GPC mit BPA-Polycarbonat als Standard) einsetzt.

Kommt das Reaktivextrusionsverfahren zur Herstellung der Blockcokondensate zum Einsatz werden in einer bevorzugten Ausführungsform Polycarbonate eingesetzt, welche bestimmte Umlagerungsstrukturen enthalten. Die in dieser Ausführungsform einzusetzenden Polycarbonate enthalten mindestens eine bevorzugt mehrere der folgenden Strukturen (13) bis (16):

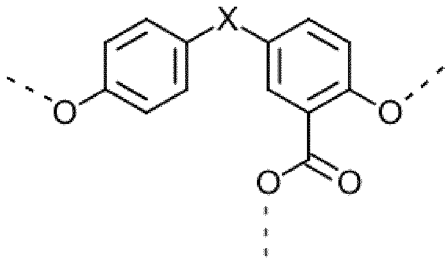

(13)

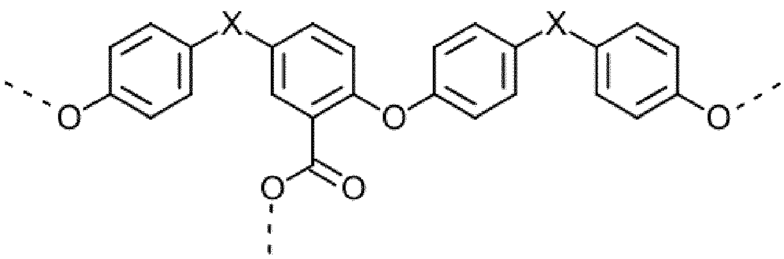

(14)

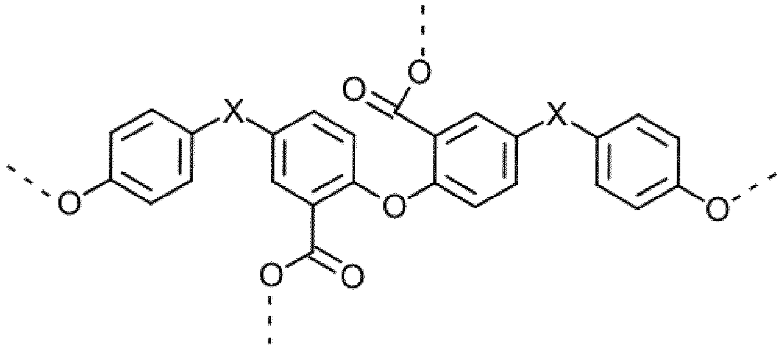

(15)

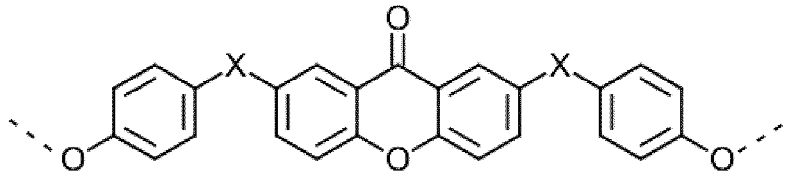

(16)

in denen die Phenylringe unabhängig voneinander ein- oder zweifach mit C1 — C8 Alkyl, Halogen, bevorzugt C1 bis C4 Alkyl, besonders bevorzugt Methyl und ganz besonders bevorzugt H substituiert sind und X für eine Einfachbindung; C1 bis C6 Alkylen, C2 bis C5 Alkyliden oder C5 bis C6 Cycloalkyliden, bevorzugt für eine Einfachbindung und C1 bis C4 Alkylen und insbesondere bevorzugt für isopropyliden wobei die Menge der Struktureinheiten (13) bis (16) in Summe (bestimmt nach Verseifung) im Allgemeinen im Bereich von 50 bis 1000 ppm, bevorzugt im Bereich von 80 bis 850 ppm beträgt.

Darüber hinaus sind Polycarbonate bevorzugt, welche als Endgruppen Phenol tragen (Phenyl-terminiertes Polycarbonat).

Um die Menge der Umlagerungsstrukturen zu bestimmen, wird das jeweilige Polycarbonat einer Totalverseifung unterzogen und so die entsprechenden Abbauprodukte der Formeln (13a) bis (16a) gebildet, deren Menge mit HPLC bestimmt wird (Dies kann z.B. wie folgt geschehen: Die Polycarbonatprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (1a) bis (4a) mittels HPLC mit UV-Detektion bestimmt):

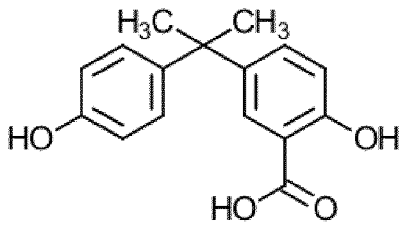

(13a)

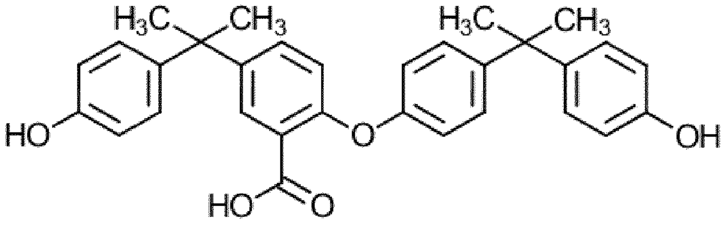

(14a)

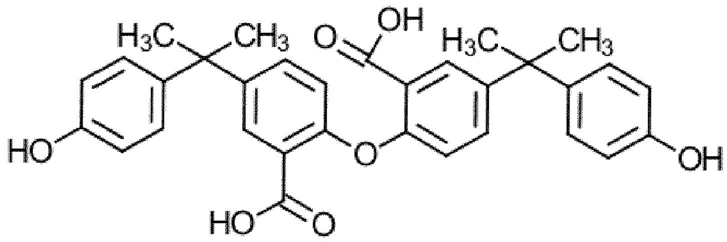

(15a)

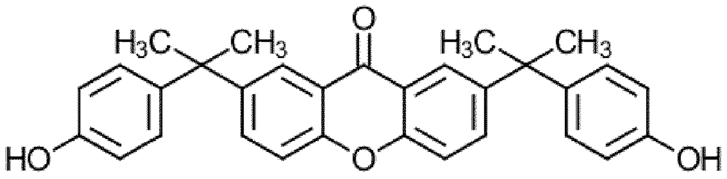

(16a)

Bevorzugt beträgt die Menge der dabei freigesetzten Verbindung der Formel (13a) 20 bis 800 ppm besonders bevorzugt 25 bis 700 ppm und insbesondere bevorzugt 30 bis 500 ppm.

Bevorzugt beträgt die Menge der dabei freigesetzten Verbindung der Formel (14a) 0 (d.h. unterhalb der Nachweisgrenze von 10 ppm) bis 100 ppm besonders bevorzugt 0 bis 80 ppm und insbesondere bevorzugt 0 bis 50 ppm.

Bevorzugt beträgt die Menge der dabei freigesetzten Verbindung der Formel (715a) 0 (d.h. unterhalb der Nachweisgrenze von 10 ppm) bis 800 ppm weiter bevorzugt 10 bis 700 ppm und besonders bevorzugt 20 bis 600 ppm sowie ganz besonders bevorzugt 30 bis 350 ppm.

Bevorzugt beträgt die Menge der dabei freigesetzten Verbindung der Formel (16a) 0 (d.h. unterhalb der Nachweisgrenze von 10 ppm) bis 300 ppm bevorzugt 5 bis 250 ppm und insbesondere bevorzugt 10 bis 200 ppm.

Die SiCoPCs weisen bevorzugt Natriumgehalte kleiner 200 ppb und insbesondere bevorzugt kleiner 150 ppb auf.

Den nach dem erfindungsgemäßen Verfahren erhältlichen Polysiloxan-Polycarbonat- Blockcokondensaten können Additive in Mengen von 0,0 Gew.-% bis 5,0 Gew.-%, bevorzugt 0,01 Gew.-% bis 1,00 Gew.-% zugemischt werden. Bei den Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, UV-Schutzmmittel, Gammasatbilisatoren, Antistatika optische Aufheller, Fließverbesserer, Thermostabilisatoren, anorganischen Pigmente, Entformungsmittel oder Verarbeitungshilfsmittel.

Diese Additive können einzeln oder in beliebigen Mischungen oder mehreren verschiedenen Mischungen der Polymerschmelze zugesetzt werden und zwar direkt bei der Isolierung des Polymeren (z.B. über ein Seitenaggregat wie Seitenextruder) Additive als reine Substanz oder als Masterbatch in Polycarbonat zugeführt werden. oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

In einer bevorzugten Ausführungsform enthält die Polymerzusammensetzung Thermo- bzw. Verarbeitungsstabilisatoren wie sie auch in WO 2015/052110 beschrieben sind . Bevorzugt geeignet sind Phosphite und Phosphonite sowie Phosphine. Beispiele sind Triphenylphosphin (TPP), Trialkylphenylphosphin, Bisdiphenylphosphino-ethan oder ein Trinaphthylphosphin, Triphenylphosphit, Diphenylalkylphosphit, Phenyldialkylphosphit, Tris(nonylphenyl)phosphit, Trilaurylphosphit. , Insbesondere bevorzugt sind Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

Geeignete UV-Absorber sind beispielsweise beschrieben in der EP 1 308 084 A1, in der DE 102007011069 A1 sowie in der DE 10311063 A1.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), (2-(4,6-diphenyl-1,3,5-triazin-2-yl)-5-(hexyloxy)-phenol (Tinuvin® 1577, Ciba Spezialitätenchemie, Basel), sowie der Benzophenone 2,4-Dihydroxy-benzophenon (Chimasorb® 22 , Ciba Spezialitätenchemie, Basel) und 2-Hydroxy-4-(octyloxy)-benzophenon (Chimassorb® 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin® B-Cap, ClariantAG).

Es können auch Mischungen dieser Ultraviolett-Absorber eingesetzt werden.

Die erfindungsgemäßen Polymerzusammensetzungen können optional Entformungsmittel enthalten Besonders geeignete Entformungsmittel sind Pentaerythrittetrastearat (PETS) oder Glycerinmonostearat (GMS) oder Mischungen hieraus.

Weiterhin können den erfindungsgemäß Blockcokondensaten auch andere Polymere zugemischt werden, wie beispielsweise Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona).

Gegenstand der Erfindung ist ferner ein Verfahren zur Herstellung des erfindungsgemäßen Faserverbundwerkstoffes bzw. des Mehrschichtverbundwerkstoffs sowie ein Verfahren zur Herstellung eines Bauteils erhältlich aus einem Mehrschichtverbundwerkstoff, sowie die Verwendung des Mehrschichtverbundwerkstoffes zur Herstellung eines Gehäuses für z.B. ein elektronisches Gerät oder als Bauteil in Automotive Anwendungen sowie das daraus erhältliche Bauteil oder Gehäuse.

**Herstellung der Faserverbundwerkstoffe und der Mehrschichtverbundwerkstoffe:**Die Faserverbundwerkstofflagen des erfindungsgemäßen Mehrschichtverbundwerkstoffs können mit den üblichen dem Fachmann bekannten Verfahren zur Herstellung von Faserverbundwerkstoffen hergestellt werden.

Für die Herstellung der erfindungsgemäßen Faserverbundwerkstoffen bzw. Mehrschicht verbundwerkstoffen können verschiedene Herstellungsmethoden eingesetzt werden. Dabei kann zunächst grundlegend unterschieden werden, ob das der Faserverbundwerkstoff bzw. das Composite Sheet zum Beispiel aus unidirektionalen Faserlagen, Gewebelagen, Wirrfaserlagen oder aus Kombinationen daraus besteht, wobei unidirektionale Fasern entweder in Form eines Halbzeugs (z.B. Gelege) oder direkt als reiner Faserstrang in das Composite Sheet eingebracht werden kann. Bei letzterem Ansatz werden die Faserstränge in der Regel zunächst einlagig mit dem thermoplastischen Harz imprägniert (dem Faserverbundwerkstoff), um anschließend zu einem mehrlagigen System (Laminat) , dem Mehrschichtverbundwerkstoff, verpresst zu werden, wobei es hier verschiedene Methoden der Imprägnierung gibt. Sofern das Composite Sheet aus Faserhalbzeugen (Gewebe, Gelege, Wirrfaser etc.) herstellt wird, zeigt der Stand der Technik ebenfalls verschiedene Möglichkeiten auf, wie Faser und Matrix zusammengebracht werden können. Gängige Methoden sind zum Bespiel das Verfahren mithilfe von Pulver Prepregs oder das so genannte Film Stacking Verfahren. Das Film Stacking Verfahren kann bevorzugt für die Herstellung der zuvor beschriebenen Faserverbundwerkstoffe eingesetzt werden. Hierbei werden abwechselnd Folien und Gewebelagen aufeinander geschichtet, wobei Flächengewicht des Gewebes und Dicke der Folien beispielsweise so abgestimmt sein können, dass man einen gewünschten Faservolumengehalt erhält.

Gemäß einer bevorzugten Ausführungsform der Erfindung sind die Faserverbundwerkstofflagen des Mehrschichtverbundwerkstoffs herstellbar durch Auftragen eines geschmolzenen auf Polycarbonat basierenden Kunststoffs auf ein über die Glasübergangstemperatur des Kunststoffs vorgeheiztes Endlos-Faserband unter Druck-Scher-Vibrationsbeaufschlagung. Ein derartiges Herstellungsverfahren ist in DE 10 2011 005 462 B3 beschrieben.

Unter einem Endlos-Faserband wird erfindungsgemäß eine Mehrzahl von zusammengeführten Rovings verstanden, wobei es sich bei den Rovings um Bündel aus vielen Endlosfasern-ohne Drall handelt.

Das bevorzugte Verfahren zur Herstellung einer Faserverbundwerkstofflage des Mehrschichtverbundwerkstoffs umfasst insbesondere die folgenden Schritte:

- Bereitstellen eines Endlos-Faserbandes und Fördern des Endlos-Faserbandes längs eines Bearbeitungsweges,
- Vorheizen des Endlos-Faserbandes auf eine Bearbeitungstemperatur, die höher ist als die Glasübergangstemperatur des auf Polycarbonat basierenden Kunststoffs,
- Auftragen des geschmolzenen auf Polycarbonat basierenden Kunststoffs auf einer gesamten Breite des Endlos-Faserbandes auf einer Oberfläche des Endlos-Faserbandes,
- Aufbringen eines Drucks auf das Endlos-Faserband senkrecht zur Bandebene nach dem Auftragen des auf Polycarbonat basierenden Kunststoffs, wobei das Druckaufbringen mit mindestens einem Druckstempel bei gleichzeitiger Scher-Vibrationsbeaufschlagung des Druckstempels mit einer Vibrations-Bewegungskomponente in der Bandebene und quer zu einer Band-Laufrichtung erfolgt,

- Halten des Endlos-Faserbandes innerhalb eines Bearbeitungstemperaturbereiches oberhalb der Glasübergangstemperatur des auf Polycarbonat basierenden Kunststoffs mindestens bis nach Abschluss der Druck-Scher-Vibrationsbeaufschlagung.

Ein Schmelzauftrag mit nachfolgender Druck-Scher-Vibrationsbeaufschlagung, solange das Roh-Faserband eine Temperatur oberhalb der Glasübergangstemperatur des auf Polycarbonat basierenden Kunststoffs hat, führt zu einem wirksamen Einarbeiten der Kunststoffschmelze in die gesamte Faser-Volumenstruktur des Roh-Faserbandes. Bevorzugt wird eine Temperatur des Endlos-Faserbandes von 380°C nicht überschritten. Üblicherweise beträgt die Temperatur des Endlosfaserbandes zwischen 180°C bis 260°C, bevorzugt zwischen 200°C bis 240°C, besonders bevorzugt zwischen 210°C bis 230°C, insbesondere 220°C. Wenn hier von Erhitzen über die Glasübergangstemperatur des Kunststoffs oder Halten über der Glasübergangstemperatur des Kunststoffs die Rede ist, so ist damit das Erhitzen auf eine Temperatur gemeint, bei der der Kunststoff vollständig geschmolzen vorliegt. Die Glasübergangstemperatur des Kunststoffs kann mittels DIN EN ISO 17025 bestimmt werden. Eine Differenz zwischen der Fasertemperatur und der Schmelzetemperatur beim Zusammentreffen der Kunststoffschmelze mit dem Endlos-Faserband liegt im Bereich von 60°C bis 120°C, bevorzugt von 70°C bis 110°C, besonders bevorzugt von 80°C bis 100°C. Durch die Druck-Scher-Vibrationsbeaufschlagung werden Gasvolumina, die sich noch innerhalb des Roh-Faserbandes befinden, effizient ausgetrieben. Das Verfahren kann kontinuierlich durchgeführt werden. Das Halten des Endlos-Faserbandes auf einer Temperatur oberhalb der Glasübergangstemperatur des Kunststoffs stellt sicher, dass der auf Polycarbonat basierende Kunststoff nicht unerwünscht vor dem vollständigen Eindringen und Teilen innerhalb und auf dem Endlos-Faserband erstarrt. Dieses Beibehalten einer Temperatur oberhalb der Glasübergangstemperatur des Kunststoffs kann nach Abschluss der Druck-Scher-Vibrationsbeaufschlagung noch während eines Beruhigungsintervalls fortgesetzt werden. Nach dem Durchführen der angegebenen Verfahrensschritte kann das hergestellte, imprägnierte Endlos-Faserband definiert abgekühlt werden. Das Endlos-Faserband kann eine Vielzahl von Endlos-Fasern aufweisen. Aufgrund der Druck-Scher-Vibrationsbeaufschlagung kann eine geringe bis nicht vorhandene Schädigung der Fasern bei guter Kunststoffdurchdringung des Faserbandes, also bei guter Imprägnierung, realisiert werden.

Besonders bevorzugt wird das Verfahren zur Herstellung einer Faserverbundwerkstofflage des Mehrschichtverbundwerkstoffs so geführt, dass das Auftragen des auf Polycarbonat basierenden Kunststoffs auf das Endlos-Faserband erfolgt, während das Endlos-Faserband unter Normal-Umgebungsdruck gefördert wird. Ein solches Auftragen des Kunststoffs vermeidet eine aufwändige Abdichtung einer unter Druck stehenden Auftragskammer nach außen.

Es ist ferner bevorzugt, das Verfahren zur Herstellung einer Faserverbundwerkstofflage des Mehrschichtverbundwerkstoffs so zu führen, dass die Druck-Scher-Vibrations-beaufschlagung eines Abschnitts des Endlos-Faserbandes nach dem Kunststoffauftrag mehrmals hintereinander längs des Bearbeitungsweges erfolgt. Es ist auch möglich das Verfahren so zu führen, dass die Druck-Scher-Vibrationsbeaufschlagung eines Abschnitts des Endlos-Faserbandes nach dem Kunststoffauftrag von beiden Seiten der Bandebene her erfolgt. Eine mehrfache Druck-Scher-Vibrationsbeaufschlagung erhöht die Effizienz des Herstellungsverfahrens. Quer-Bewegungskomponenten der verschiedenen Druck-Scher-Vibrationsbeaufschlagungseinrichtungen können synchronisiert gegenläufig, also im Gegentakt, gesteuert werden. Zwischen den hintereinander erfolgenden Druck-Scher-Vibrationsbeaufschlagungen kann gezielt jeweils ein Beruhigungsintervall vorgesehen sein, bei dem das Roh-Faserband während einer vorgegebenen Zeitspanne nicht mit Druck und/oder Scher-Vibration beaufschlagt ist. Eine Druck-Scher-Vibrationsbeaufschlagung von beiden Seiten her kann durch Druckbeaufschlagungseinrichtungen erfolgen, die im Bearbeitungsweg nacheinander angeordnet sind. Alternativ ist eine gleichzeitige Druck-Scher-Vibrationsbeaufschlagung von beiden Seiten her möglich. Auch die Druck-Scher-Vibrationsbeaufschlagung von beiden Seiten her kann mit einer synchronisierten Gegenläufigkeit der Quer-Bewegungskomponenten, also im gesteuerten Gegentakt, erfolgen.

Die Frequenzen der Druck-Scher-Vibrationsbeaufschlagung können im Bereich zwischen 1 Hz und 40 kHz liegen. Amplituden der Scher-Vibrationsbeaufschlagung können im Bereich zwischen 0,1 mm und 5 mm liegen. Ein Druck der Druck-Scher-Vibrationsbeaufschlagung kann im Bereich zwischen 0,01 MPa und 2 MPa liegen.

Unter dem Verbinden der geschichteten Lagen Faserverbundwerkstoff wird erfindungsgemäß jedes Verfahren verstanden, welches eine körperliche Verbindung der geschichteten Lagen Faserverbundwerkstoff zur Folge hat. Vorzugsweise erfolgt das Verbinden der geschichteten Lagen Faserverbundwerkstoff zum Mehrschichtverbundwerkstoff mittels Druck und/oder Temperatur, z.B. durch Laminierung. Der zum Verbinden der geschichteten Lagen Faserverbundwerkstoff zum Mehrschichtverbundwerkstoff eingesetzte Druck kann im Bereich von 5 bis 15 bar, bevorzugt 7 bis 13 bar, besonders bevorzugt 8 bis 12 bar liegen. Die Temperatur zum Verbinden der Faserverbundwerkstofflagen kann 80°C bis 300°C betragen. Wird ein Verbindungsverfahren mit Heiz- und Kühlzonen angewendet, so kann die Temperatur zum Verbinden der Faserverbundwerkstofflagen in den Heizzonen von 220°C bis 300°C, bevorzugt von 230°C bis 290°C, besonders bevorzugt von 240°C bis 280°C, betragen. Die Temperatur in den Kühlzonen kann von 80°C bis

140°C, bevorzugt von 90°C bis 130°C, besonders bevorzugt von 100°C bis 120°C, betragen.

Neben dem Laminieren sind jedoch auch beispielsweise Kleben oder Schweißen zum Verbinden der geschichteten Lagen Faserverbundwerkstoff möglich

Gemäß einer bevorzugten Ausführungsform resultiert das Verbinden der geschichteten Lagen Faserverbundwerkstoff in flächig miteinander verbundenen Lagen Faserverbundwerkstoff. Flächig bedeutet dabei, dass mindestens 50 %, vorzugsweise mindestens 75 %, 90 %, 95 %, 99 % oder 100 % ("vollflächige" Verbindung) der einander zugewandten Oberflächen zweier benachbarter Lagen Faserverbundwerkstoff miteinander unmittelbar verbunden sind. Der Grad der Verbindung kann mikroskopisch in Querschnitten bestimmt werden oder auch durch die Abwesenheit von Hohlräumen, z.B. Lufteinschlüssen, im Faserverbundwerkstoff bestimmt werden.

Mehrschichtverbundwerkstoffe lassen sich weiterhin auch über eine statische Presse herstellen. Dabei werden Folien aus SiCoPC und die Gewebelagen abwechselnd geschichtet, wobei die äußeren Lagen jeweils durch eine Folienlage abgeschlossen werden.

Ein weiterer Vorteil des erfindungsgemäßen Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Gemäß einer Ausführungsform des erfindungsgemäßen Verfahrens erfolgt die Umformung unter Wärmeeinwirkung, insbesondere durch Thermoverformung.

Um eine bessere Verträglichkeit der Faserlagen und insbesondere der Endlosfasern mit dem thermoplastischen Matrixmaterialien zu erhalten, können die Faserlagen, insbesondere die Endlosfasern oder Gewebe / Gewirke, mit einer Silanverbindung an ihrer Oberfläche vorbehandelt sein. Bevorzugte Silanverbindungen sind Aminopropyltrimethoxysilan, Aminobutyltrimethoxysilan, Aminopropyltriethoxysilan, Aminobutyltriethoxysilan

Generell lassen sich die Fasern über Schlichten derart chemisch und/oder physikalisch modifizieren, um beispielsweise bei der anschließenden Herstellung von Faserverbundwerkstoffen aus den Faserlagen und dem Matrixmaterial den gewünschten Grad der Anbindung zwischen Fasern und dem Matrixmaterial einzustellen. Hierzu können alle dem Fachmann bekannten Schlichten eingesetzt werden, und zwar neben den oben genannten Silanverbindungen bevorzugt Epoxidharze und deren Derivate, Epoxyester, Epoxyether, Epoxyurethane, Polyurethanester, Polyurethanether, Isocyanate, Polyimide, Polyamide und beliebige Mischungen aus zwei oder mehr der vorstehenden Verbindungen. Die konkrete Auswahl des Schlichtematerials hängt von dem Material der Fasern und der gewünschten Stärke der Anbindung ab. Dabei kann die Schlichte beispielsweise in Form einer wässrigen oder nicht-wässrigen Lösung oder Emulsion eingesetzt werden, wobei die Anbringung der Schlichte an die erfindungsgemäßen Fasern dabei nach bekannten Verfahren für die Beschlichtung von Kurzfasern, beispielsweise in einem Tauchprozess, erfolgen kann.

Wesentlicher Aspekt ist die Tatsache, dass das strukturversteifende Fasermaterial und das thermoplastische Material eine stoffschlüssige Verbindung miteinander eingehen. Die Einstellung der stoffschlüssigen Verbindung erfolgt über die Prozessparameter, insbesondere Massetemperatur und Werkzeugtemperatur sowie Druck und hängt auch von der oben erwähnten Schlichte ab.

Ein weiterer Gegenstand der Erfindung ist ein Gehäuseteil, welches geeignet ist für die Verwendung als oder den Einsatz in einem Gehäuse eines elektronischen Geräts, wobei das Gehäuseteil einen erfindungsgemäßen Mehrschichtverbundwerkstoff enthält oder nach dem erfindungsgemäßen Verfahren zur Herstellung eines Gehäuseteils erhältlich ist und wobei das Gehäuse eines elektronischen Geräts vorzugsweise die Monitorrückseite oder die Unterseite eines Laptops darstellt.

Gehäuseteile erhältlich aus den erfindungsgemäßen Verbundwerkstoffen werden insbesondere im IT Bereich verwendet als Gehäuseteile von beispielsweise Computern, Monitoren, Tablets oder Telefonen, Beispielsweise kann ein Gehäuseteil die Rückseite eines Mobiltelefons, die Unterseite eines Laptops, die Monitorrückseite eines Laptops, die Rückseite eines Tablets, etc. darstellen oder aber auch nur Bestandteil einer Rückseite eines Mobiltelefons, einer Unterseite eines Laptops, einer Monitorrückseite eines Laptops, einer Rückseite eines Tablets, etc. sein.

Gegenstand der Erfindung sind weiterhin Bauteile bzw. Struktur- und Kleidungselemente des Fahrzeuginnenbereichs (Wände, Deckenverkleidungen, Türen, Fenster etc.), Gepäckablagen, Führerpult, Tische, Schall- und Dämmstoffe, vertikale Oberflächen der Fahrzeugaußenhaut, Außenflächen des Unterbaus, Leuchtenabdeckungen, Lichtdiffuser etc. wobei das Teil bzw. Struktur- und Kleidungselement einen erfindungsgemäßen Mehrschichtverbundwerkstoff enthält. Faserverbundwerkstoffe der vorliegenden Erfindung können weiterhin verwendet werden zur Herstellung von dünnwandigen Formteilen (z.B. Datentechnik-Gehäuseteile, TV-Gehäuse, Notebooks), wo besonders hohe Ansprüche an Kerbschlagzähigkeit, Fließnahtfestigkeit, Flammwidrigkeit und Oberflächenqualität der eingesetzten Materialien gestellt werden, weiterhin zur Herstellung von Gehäuseteilen z.B. für Haushaltsgeräte, Büromaschinen, wie Monitore oder Drucker, oder Abdeckplatten für den Bausektor und Teile für den Kfz-Sektor oder Teile für den Elektrosektor, die ebenfalls Gegestand der vorliegenden Erfindung sind.

Weitere Einzelheiten und Vorteile der Erfindung ergeben sich aus der nachfolgenden Beschreibung der zugehörigen Zeichnung, die bevorzugte Ausführungsformen zeigt. In der Zeichnung zeigen:

Fig. 1 einen Mehrschichtverbundwerkstoff in schematischer und perspektivischer Darstellung aus drei übereinanderliegenden Lagen Faserverbundwerkstoff mit Ausschnittsvergrößerung, wobei die innenliegende Lage relativ zu den außenliegenden Lagen Faserverbundwerkstoff um 90° rotiert ist,

Fig. 2 einen Mehrschichtverbundwerkstoff in schematischer und perspektivischer Darstellung aus fünf übereinanderliegenden Lagen Faserverbundwerkstoff, wobei die innenliegenden Lagen gleich orientiert sind und ihre Orientierung relativ zu den außenliegenden Lagen Faserverbundwerkstoff um 90° rotiert sind,

Fig. 3a einen Mehrschichtverbundwerkstoff in schematischer und perspektivischer Darstellung aus sechs übereinanderliegenden Lagen Faserverbundwerkstoff, wobei die innenliegenden Lagen gleich orientiert sind und ihre Orientierung relativ zu den außenliegenden Lagen Faserverbundwerkstoff um 90° rotiert sind,

Fig. 3b: einen Mehrschichtverbundwerkstoff in schematischer und perspektivischer Darstellung aus drei übereinanderliegenden Lagen Faserverbundwerkstoff, wobei die innenliegende Lage eine höhere Dicke aufweist als die Summe der beiden außenliegenden Lagen. Das Dickenverhältnis der innenliegenden Lage zur Summe der beiden außenliegenden Lagen entspricht dabei dem Dickenverhältnis der Summe aller innenliegenden Lagen zur Summe der beiden außenliegenden Lagen des Mehrschichtverbundwerkstoffs aus Fig. 3a,

Fig. 4a einen Mehrschichtverbundwerkstoff in schematischer und perspektivischer Darstellung aus drei übereinanderliegenden Lagen Faserverbundwerkstoff und einer zusätzlichen Materiallage auf einer außenliegenden Lage Faserverbundwerkstoff,

Fig. 4b einen Mehrschichtverbundwerkstoffs in schematischer und perspektivischer Darstellung aus drei übereinanderliegenden Lagen Faserverbundwerkstoff und zwei zusätzlichen innenliegenden weiteren Materiallagen, beispielsweise Kunststoffschichten, wobei sich jeweils eine innenliegende weitere Materiallage zwischen den außenliegenden Lagen Faserverbundwerkstoff und der innenliegenden Lage Faserverbundwerkstoff befindet, und

Figur 1 zeigt einen Ausschnitt eines Mehrschichtverbundwerkstoffs 1 aus drei übereinanderliegenden Lagen Faserverbundwerkstoff 2, 3, wobei die innenliegende Lage Faserverbundwerkstoff 2 relativ zu den außenliegenden Lagen 3 Faserverbundwerkstoff um 90° rotiert ist. Die Ausschnittsvergrößerung in Figur 1 zeigt, dass jede der Lagen 2, 3 des Mehrschichtverbundwerkstoffs Endlosfasern 4 enthält, die innerhalb der jeweiligen Lage unidirektional ausgerichtet sind und auf Polycarbonat basierenden Kunststoff 5 eingebettet sind. Die Orientierung der jeweiligen Lage Faserverbundwerkstoff 2,3 wird durch die Orientierung der darin enthaltenen unidirektional ausgerichteten Endlosfasern 4 bestimmt. Die Endlosfasern 4 erstrecken sich über die gesamte Länge bzw. Breite des Mehrschichtverbundwerkstoffs. Die Lagen 2, 3 sind vollflächig miteinander verbunden.

Der Mehrschichtverbundwerkstoff 1 gemäß Figur 2 besteht aus fünf übereinanderliegenden Lagen Faserverbundwerkstoff 2, 3, wobei die innenliegenden Lagen Faserverbundwerkstoff 2 gleich orientiert sind und ihre Orientierung relativ zu den außenliegenden Lagen Faserverbundwerkstoff 3 um 90° rotiert sind.

Der Mehrschichtverbundwerkstoff 1 gemäß Figur 3a besteht aus sechs übereinanderliegenden Lagen Faserverbundwerkstoff 2, 3, wobei die innenliegenden Lagen Faserverbundwerkstoff 2 gleich orientiert sind und ihre Orientierung relativ zu den außenliegenden Lagen Faserverbundwerkstoff 3 um 90° rotiert sind.

Figur 3b zeigt einen Mehrschichtverbundwerkstoff 1 aus drei übereinanderliegenden Lagen Faserverbundwerkstoff 2, 3, wobei die innenliegende Lage 2 eine höhere Dicke aufweist als die Summe der beiden außenliegenden Lagen 3. Figur 4a zeigt den Mehrschichtverbundwerkstoff 1 aus drei übereinanderliegenden Lagen Faserverbundwerkstoff 2, 3, wie für Figur 1 beschrieben, nur mit einer zusätzlichen weiteren außenliegenden Materiallage 6 auf einer der außenliegenden Lagen Faserverbundwerkstoff 3. Die außenliegende Materiallage 6 kann beispielsweise eine oder mehrere faserfreie Kunststofflagen und/oder eine dünne Verblendung, beispielsweise eine Lackschicht oder ein Furnier, umfassen.

Figur 4b zeigt einen Mehrschichtverbundwerkstoff 1 aus drei übereinanderliegenden Lagen Faserverbundwerkstoff 2, 3, wie für Figur 1 beschrieben, nur mit zwei zusätzlichen weiteren innenliegenden Materiallagen 7, wobei sich jeweils eine innenliegende weitere Materiallage 7 zwischen jeweils einer der außenliegenden Lagen 3 Faserverbundwerkstoff und der innenliegenden Lage 2 Faserverbundwerkstoff befindet. Die weiteren innenliegenden Materiallagen 7 können gleich oder unterschiedlich aufgebaut sein und beispielsweise eine oder mehrere faserfreie Kunststofflagen umfassen.

## Ausführungsbeispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

**Herstellung des Blockcokondensats:**

Ausgangsstoffe:

Polycarbonat:

Als Ausgangsstoff für die Reaktivextrusion wird lineares Bisphenol-A-Polycarbonat mit Endgruppen basierend auf Phenol mit einem Schmelzvolumenindex von 59 — 62 $cm^3$/10min (gemessen bei 300 °C und 1,2 kg Belastung gemäß ISO 1133 (Jahr 2011)) eingesetzt. Dieses Polycarbonat enthält keine Additive wie UV-Stabilisatoren, Entformungsmittel oder Thermostabilisatoren. Die Darstellung des Polycarbonats erfolgte über einen Schmelzeumesterungsprozess wie in DE 102008019503 beschrieben. Das Polycarbonat weist einen Gehalt an phenolischen Endgruppen von ca. 600 ppm auf.

Siloxanblock:

Hydrochinon-terminiertes Polydimethylsiloxan der Formel (11) mit n von ca. 20 und m im Bereich von 3 bis 4 in Formel (2) ($R^1$ = H, $R^2$ = Methyl,) , mit einem Hydroxy-Gehalt von 22,2 mg KOH/g und einer Viskosität von 175 mPas (23°C); der Natrium-Gehalt beträgt ca. 3 ppm. Das Siloxan enthält ca. 3 Gew.% Isooktanol.

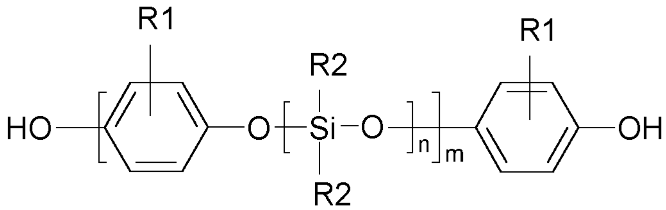

Katalysator:

Als Katalysator wird Tetraphenylphosphoniumphenolat der Firma Rhein Chemie Rheinau GmbH (Mannheim Deutschland) in Form eines Masterbatches eingesetzt. Tetraphenylphosphoniumphenolat wird als Mischkristall mit Phenol eingesetzt und enthält ca. 70 % Tetraphenylphosphoniumphenolat. Die nachfolgenden Mengen beziehen sich auf die von der Firma Rhein Chemie erhaltene Substanz (als Mischkristall mit Phenol).

Der Masterbatch wird als 0,25 %ige Mischung hergestellt. Hierzu werden 4982 g mit 18 g Tetraphenylphosphoniumphenolat im Rhönradmischer für 30 Minuten aufgetrudelt. Das Masterbatch wird im Verhältnis 1:10 dosiert, so dass in der Gesammenge an Polycarbonat der Katalysator mit einem Anteil von 0,025 Gew.-% vorliegt.

MVR

Die Bestimmung des Schmelzvolumenrate (MVR) erfolgt soweit nicht anders angegeben nach ISO 1133 (Jahr 2011) (bei 300 °C; 1,2 kg) soweit keine anderen Bedingungen beschrieben worden sind.

Lösungsviskosität

Bestimmung der Lösungsviskosität: Die relative Lösungsviskosität (ηrel; auch als eta rel bezeichnet) wurde in Dichlormethan bei einer Konzentration von 5 g/1 bei 25 °C mit einem Ubbelohdeviskosimeter bestimmt.

Natriumgehalt

Der Natriumgehalt wird über Massenspektroskopie mit induktiv gekoppeltem Plasma (ICP-MS) bestimmt.

Die Herstellung des Blockcokondensats aus der Polycarbonat-Komponente und der Siloxan-Komponente erfolgt über ein Reaktivextrusionsverfahren gemäß WO2015/052110 A1. :

Fig.1 der WO 2015/052110 Alzeigt ein Schema zur Herstellung der Siloxan-haltigen Blockcokondensate. Polycarbonat und ein Katalysator-Masterbatch werden über die gravimetrischen Zuführungen (4) und (5) auf den Doppelschneckenextruder (1) dosiert. Der Extruder (Typ ZSE 27 MAXX von Fa. Leistritz Extrusionstechnik GmbH, Nürnberg) ist ein gleichsinnig drehender Zweischneckenextruder mit Vakuumzonen zur Abtrennung der Brüden. Der Extruder besteht aus 11 Gehäuseteilen . Im Gehäuseteil 1 erfolgt die Zugabe von Polycarbonat sowie Katalysatormasterbatch sowie im Gehäuse 2 und 3 das Aufschmelzen dieser Komponenten. Im Gehäuseteil 4 erfolgt die Zugabe der flüssigen Silikonkomponente. Die Gehäuseteile 5 und 6 dienen der Einmischung der flüssigen Silikonkomponente. Die Gehäuse 7 bis 10 sind mit Entgasungsöffnungen versehen, um die Kondensationsprodukte zu entfernen. Die Gehäuse 7 und 8 sind der ersten und die Gehäuse 9 und 10 der zweiten Vakuumstufe zugeordnet. Das Vakuum in der ersten Vakuumstufe betrug zwischen 250 und 500 mbar Absolutdruck. Das Vakuum in der zweiten Vakuumstufe beträgt weniger als 1 mbar. Das Siloxan wird in einem Tank vorgelegt und über eine Dosierpumpe auf den Extruder gegeben. Das Vakuum wird über 2 Vakuumpumpen generiert. Die Brüden werden vom Extruder weggeführt und in 2 Kondensatoren aufgefangen. Die so entgaste Schmelze wird über eine Leitung vom Zweischneckenextruder auf einen Hochviskosreaktor geführt

Bei dem Hochviskosreaktor handelt es sich um einen selbstreinigenden Apparat mit zwei gegenläufigen, horizontal und achsparallel angeordneten Rotoren. Der Aufbau ist in der europäischen Patentanmeldung EP460466 beschrieben, siehe dort Fig.7. Die verwendete Maschine hat einen Rotordurchmesser von 187 mm bei einer Länge von 924 mm. Der gesamte Innenraum des Reaktors hat ein Volumen von 44,6 Litern. Der Hochviskosreaktor ist ebenfalls an eine Vakuumpumpe (8) und an einen Kondensator (9) angeschlossen. Das am Hochviskosreaktor anliegende Vakuum beträgt 0,1 bis 5 mbar. Nach Abschluss der Reaktion wird das Blockcokondensat über eine Austragsschnecke abgeführt und anschließend granuliert (über Wasserbad (10) und Granulator (11). Das Molekulargewicht des Blockcokondensats wird über den Durchsatz gesteuert. Der Durchsatz in der Extruder/Hochviskosreaktorkombination wird so eingestellt, dass sich ein Lösungsviskosität des Blockcokondensats von ca. eta rel 1,31 ergibt.

Das Blockcokondensat weist einen MVR von 6,3 cm3/10 min auf.

Das Blockcokondensat weist einen Natriumgehalt von 140 ppb auf.

Materialien für Vergleichsbeispiele:

Makrolon® 3108 (lineares Bisphenol A —basiertes Polycarbonat) der Covestro Deutschland AG mit einem MVR von 6 cm3/10 min.

Makrolon® 2608 (lineares Bisphenol A —basiertes Polycarbonat) der Covestro Deutschland AG mit einem MVR von 12 cm3/10 min .

Herstellung des Mehrschichtverbundwerkstoffs:

Das jeweilige Granulat wird für 4 Stunden bei 110 °C getrocknet und wird danach mittels eines Einschneckenextruders (Kuhne (Typ: K35-24D) Drehzahl Extruder 40 U/min; Massetemperatur Extruder ca. 250°C) mit Breitschlitzdüse (Breitschlitzfoliendüse 450 mm; Lippenspalt 0,8 mm; Abzug Gießwalze 130°C; Abzug Kühlwalze 130°C; Abzugsgeschwindigkeit ca. 3 m/min) zu Folien der Dicke von ca. 130 $\mu$m verarbeitet. Diese Folien wurden anschließend im Film-Stacking Verfahren gemäß den unten genannten Prozessparametern auf einer statischen Presse vom Typ Organo Presse LAP 100 der Firma Gottfried Joos Maschinenfabrik GmbH zu Composite Sheets weiterverarbeitet. Zur Herstellung der Composite Sheets wurden Glasfasergewebe der Firma Schlösser & Cramer KG (Haan, Deutschland) vom Typ Style 3107 mit einem K506 Finish eingesetzt. Die Gewebe besitzen ein Flächengewicht von 390 $g/m^2$ bei einer Köper 2/2 Bindung. Folien und Gewebelagen wurden abwechselnd geschichtet, wobei Ober- und Unterseite des Composite Sheets jeweils durch eine Folienlage abgeschlossen wurde. Insgesamt werden 5 Folien aus Substratmaterial mit 4 Glasfasergewebematten im Wechsel aufeinandergelegt, so dass die Kettrichtung gleich bleibt. Die Materialien werden bei konstantem Druck von 12 bar verpresst, wobei die Temperatur zwischen 280 und 295 °C liegt.

Beispiel 1 (Vergleich)

Zur Herstellung des Mehrschichtverbundwerkstoffs wird Makrolon 2608 eingesetzt. Das Material wird wie oben beschrieben zu Folien extrudiert und zum Mehrschichtverbund weiterverarbeitet.

Beispiel 2 (Vergleich)

Zur Herstellung des Mehrschichtverbundwerkstoffs wird Makrolon 3108 eingesetzt. Das Material wird wie oben

beschrieben zu Folien extrudiert und zum Mehrschichtverbund weiterverarbeitet.

Beispiel 3 (Erfindungsgemäß)

Zur Herstellung des Mehrschichtverbundwerkstoffs wird Siloxan-haltiges Blockcokondensat verwendet, welches wie oben beschrieben hergestellt wurde,. Das Material wird wie oben beschrieben zu Folien extrudiert und zum Mehrschichtverbund weiterverarbeitet.

Beispiel 4 (Erfindungsgemäß)

Zur Herstellung des Mehrschichtverbundwerkstoffs wird Siloxan-haltiges Blockcokondensat verwendet, welches wie oben beschrieben hergestellt wurde,. Mittels Compoundierung wird diesem Siloxan-haltigem Blockcokondensatzur Einfärbung noch 1 % Titandioxid (Kronos 2230 der Firma Kronos Worldwide Inc.) und 0,2 % Lotader 8900 der Firma Arkema zugesetzt. Das Material weist einen MVR von 6,6 auf.

Biegeversuch:

Aus den Composite Sheets werden Stäbe herausgesägt. Die lange Seite des Probekörpers liegt dabei in Kettrichtung. Die geschnittenen Probekörper (ca. 80x20mm) wurden in die Schablonen bei einer Randfaserdehnung von ca. 0,96 % eingespannt und für 24h darin belassen. Danach erfolgte die Auswertung der Defekte wie unten beschrieben.

Auswertung der Oberflächendefekte mittels Lichtmikroskopie:

Die Lichtmikroskop Aufnahmen (Durchlicht; Hellfeld) wurden an jeweils einem ca. 2 cm langen Stück (vom Rand zur Mitte) und einem Stück (ca.1 cm) direkt aus der Mitte aufgenommen. Die Aufnahmen zeigen bei allen drei Proben senkrecht wie auch waagerecht verlaufende Risse. Bei der Auswertung wurden die senkrecht verlaufenden Risse, d.h. die Risse die senkrecht zur langen Seite (Kettrichtung) des Probekörpers verlaufen, berücksichtigt.

Tabelle 1: Risse im Bereich Rand/Mitte

| | Beispiel 1 V | Beispiel 2 V | Beispiel 3 E |
|---|---|---|---|
| Risse (Anzahl) | 33 | 29 | 12 |
| Risslänge (cm) | 2,2 | 2,2 | 2,2 |

Tabelle 2: Risse im Bereich Mitte/Mitte

| | Beispiel 1V | Beispiel 2 V | Beispiel 3 E |
|---|---|---|---|
| Risse (Anzahl) | 9 | 10 | 4 |
| Risslänge (cm) | 1,0 | 1,0 | 1,0 |

Schmelzestabilität:

| | Bsp. 3 E | Bsp. 4 E | Bsp 1 V | Bsp 2 V |
|---|---|---|---|---|
| MVR 300 °C / 5 min | 6,3 | 6,6 | 11,1 | 5,7 |
| MVR 300 °C / 20 min | 6,4 | 6,6 | 11,0 | 5,7 |
| MVR 300 °C / 30min | 6,3 | 6,6 | 11,4 | 5,7 |
| MVR 320 °C / 5 min | 10,6 | 11,5 | 19,5 | 10 |
| MVR 320 °C / 20 min | 10,5 | 11,3 | 19,9 | 10,1 |
| MVR 320 °C / 30 min | 10,5 | 11,3 | 20,0 | 9,8 |
| Es bedeuten: V = Vergleich, E = Erfindungsgemäß | | | | |

Die Substratmaterialien für die erfindungsgemäßen Mehrschichtkörper zeigen eine außergewöhnlich hohe Schmelzestabilität und sind damit für die Verarbeitung zu den erfindungsgemäßen Mehrschichtkörpern insbesondere geeignet. Es ist überraschend, dass ein im Rekativextrusionsverfahren hergestelltes Siloxan-haltiges Blockcokondensat eine ähnliche bzw. sogar höhere Schmelzestabilität als ein ein herkömmliches im Phasengranzflächenverfahren hergestelltes Polycarbonat aufweist. Trotz des ungewöhnlich hohen Natriumwerts des Blockcokondensat ist es überraschend, dass das Material eine derart hohe Schmelzestabilität aufweist.

Computertomographie:

Prüfkörper werden nach einem Biegewechseltest mittels Computertomographie untersucht. Hierzu wird das Gerät Empyrian der Firma Panalytical verwendet. Die Proben werden dabei mit Cu-K$\alpha$-Strahlung durchleuchtet und ein Tomogramm erstellt. Die Probe wird dabei um eine Orientierungsrichtung des Glasfasergewebes in (Bruchteilen) Gradschritten gedreht (ca. 900 Aufnahmen). Das Tomogramm ist die dreidimendsionale Darstellung der Dichteverteilung der Komponenten in der Probe (Glasfasergewebe, Matrix, Hohlräume). Der Kontrast auf den Aufnahmen korreliert mit der Dichte. Schwarze Bereich haben dabei die niedrigste Dichte (korrelieren mit Hohlräumen) und helle Bereiche (Glasfasergewebe) haben die höchste Dichte. Mit Hilfe der Einzelaufnahmen wird eine dreidimensionale Darstellung der Dichteverteilung (Software: VG Studio der Firma Volume Graphics, Heidelberg) erstellt; das Volumen der Poren (Volumen-Luft) wird über den ihm zugeordneten Grauwert aus der dreidimensionalen Darstellung des CT's ermittelt.

Biegewechseltest:

Aus den Mehrschichtkörpern der Beispiele 1 bis 4 wurden 0,5 cm breite Stäbe herausgesägt. Diese Stäbe wurden eingespannt und 10 x zu beiden Seiten hin gebogen und anschließend von der Probe das Computertomogramm wie oben beschrieben erstellt, wie oben beschrieben gemessen und das Volumen der entstandenen Hohlräume untersucht.

| | Messung 1 | | | Messung 2 | | |
|---|---|---|---|---|---|---|
| | Volumen $_{gesamt}$ | Volumen $_{Luft}$ | %-Anteil $_{Luft}$ | Volumen $_{gesamt}$ | Volumen $_{Luft}$ | %-Anteil $_{Luft}$ |
| Bsp. 1V | 15,27 $mm^3$ | 1,12 $mm^3$ | 7,30% | 14,81 $mm^3$ | 3,05 $mm^3$ | 20,60% |
| Bsp. 2V | 18,72 $mm^3$ | 2,27 $mm^3$ | 12,10% | 20,11 $mm^3$ | 1,90 $mm^3$ | 9,40% |
| Bsp. 3E | 20,39 $mm^3$ | 0,56 $mm^3$ | 2,70% | 13,87 $mm^3$ | 0,55 $mm^3$ | 4,00% |
| Bsp. 4E | 18,83 $mm^3$ | 0,41 $mm^3$ | 2,20% | 18,38 $mm^3$ | 1,37 $mm^3$ | 7,50% |

Die CT-Aufnahmen bzw. die Volumenauswertung der Hohlräume zeigen, dass die Proben der Vergleichsbeispiele 1 und 2 größere Hohlräume nach dem Biegewechseltest aufweisen als die Proben der erfindungsgemäßen Beispiele 3 und 4. Bei den Proben der Beispiele 1 und 2 liegt der Anteil der entstanden Hohlräume bei ca. 12,4 % wohingegen die erfindungsgemäßen Beispiele überraschenderweise einen durchschnittlichen Anteil von 4,1 % aufweisen.

**Patentansprüche**

1. Faserverbundwerkstoff, umfassend mindestens eine Lage Fasermaterial wobei die Fasermaterialien ausgewählt sind aus Glasfasern und oder Kohlefasern als Endlosfasern oder als Gewebe und Gewirke, eingebettet in einen auf Siloxan-haltigen Blockcokondensat basierenden Thermoplasten enthaltend eine Struktureinheit (1)

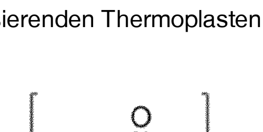
(1),

wobei $R_1$ ein divalenter substituierter oder unsubstituierter aromatischer Rest, ein divalenter linearer oder cyclischer aliphatischer Rest bedeutet, oder die Struktureinheit (1) eine Mischung aus Bausteinen ist, wobei $R_1$ ein divalenter substituierter oder unsubstituierter aromatischer Rest und bzw. $R_1$ ein divalenter linearer oder cyclischer aliphatischer

Rest ist,
und einen Siloxanblock, der sich von einem Hydroxyaryl-terminierten Polysiloxan mit der folgenden Struktur (10) ableitet

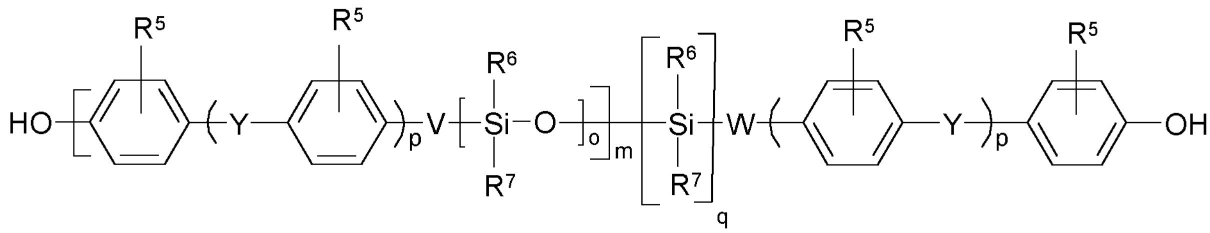

(10),

wobei

$R^5$ für Wasserstoff oder Methyl steht,
$R^6$ und $R^7$ unabhängig voneinander für Methyl stehen,
V für eine Einfachbindung, O, C1 bis C6-Alkyl oder C1 bis C6-Alkoxy steht,
W für eine Einfachbindung, C1 bis C6-Alkylen, C2- bis C5-Alkyliden oder C1 bis C6-Alkoxy steht,
Y für eine Einfachbindung, -CO-, -O-, C1- bis C6-Alkylen, C2 bis C5-Alkyliden, für einen C5 bis C6-Cycloalkylidenrest, der ein- oder mehrfach mit C1 bis C4-Alkyl substituiert sein kann, oder für C6 bis C12-Arylen, welches mit einem weiteren aromatischen Ring enthaltend Heteroatome kondensiert sein kann, steht,
m für eine durchschnittliche Anzahl von Wiederholungseinheiten von 2 bis 6 steht,
o für eine durchschnittliche Anzahl von Wiederholungseinheiten von 10 bis 400 steht, und
p und q jeweils für 0 oder 1 stehen,

wobei der Gehalt an Siloxanblöcken im Siloxan-haltigen Blockcokondensat 0,5 bis 40 Gew.-%, bezogen auf die eingesetzten Siloxanblöcke und Polycarbonatblöcke, beträgt.

**2.** Mehrschichtverbundwerkstoff, der mindestens zwei, bevorzugt mindestens drei übereinander liegende Lagen Faserverbundwerkstoff gemäß Anspruch 1 umfasst, wobei im Falle von drei Verbundwerkstofflagen diese relativ zueinander definiert werden als zwei außenliegende Lagen Faserverbundwerkstoff und mindestens eine innenliegende Lage Faserverbundwerkstoff, wobei im Falle von Endlosfasern als Fasermaterial diese in der jeweiligen Lage unidirektional ausgerichtet sind.

**3.** Mehrschichtverbundwerkstoff gemäß Anspruch 2, wobei die innenliegenden Lagen Faserverbundwerkstoff im Wesentlichen gleich orientiert sind und ihre Orientierung relativ zu den außenliegenden Lagen Faserverbundwerkstoff um 30° bis 90° rotiert sein, wobei die Orientierung einer Lage Faserverbundwerkstoff durch die Orientierung der darin enthaltenen, unidirektional ausgerichteten Fasern bestimmt wird.

**4.** Mehrschichtverbundwerkstoff gemäß Anspruch 2, wobei mindestens ein Teil der Lagen die gleiche Orientierung aufweisen und mindestens ein anderer Teil der Lagen um 30° bis 90° rotiert ist und die äußeren lagen in einer 0° Orientierung hierzu vorliegen.

**5.** Mehrschichtverbundwerkstoff gemäß Anspruch 2, wobei die innenliegenden Lagen die gleiche Orientierung aufweisen und ihre Orientierung relativ zu den außenliegenden Lagen Faserverbundwerkstoff um 30° bis 90° rotiert sind.

**6.** Mehrschichtverbundwerkstoff gemäß einem der Ansprüche 1 bis 5, wobei der Faservolumengehalt der außenliegenden Lagen Faserverbundwerkstoff höchstens 50 Vol.-%, bezogen auf das Volumen der außenliegenden Lagen Faserverbundwerkstoff, beträgt.

**7.** Faserverbundwerkstoff oder Mehrschichtverbundwerkstoff gemäß einem der Ansprüche 1 bis 6, wobei $R_1$ der Struktureinheit (1) abgeleitet ist von Dihydroxyarylverbindungen der Formel (3)

$$HO-Z-OH \qquad (3)$$

in welcher
Z für einen Rest der Formel (3a)

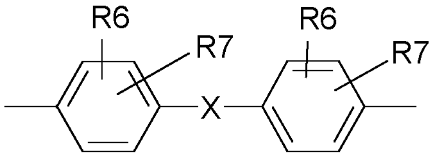

(3a)

in der

R6 und R7 unabhängig voneinander für Wasserstoff, C1-C18-Alkyl, C1-C18-Alkoxy, Halogen oder für jeweils gegebenenfalls substituiertes Aryl oder Aralkyl stehen, und
X für —CO—, —O—, —S—, C1- bis C6-Alkylen, C2- bis C5-Alkyliden, C6 bis C10-Cycloalkyliden oder für C6- bis C12-Arylen, welches gegebenenfalls mit weiteren Heteroatome enthaltenden aromatischen Ringen kondensiert sein kann, steht.

**8.** Faserverbundwerkstoff oder Mehrschichtverbundwerkstoff gemäß einem der Ansprüche 1 bis 7, wobei für den Aufbau des Siloxanhaltigen Blockcokondensats der Siloxanblock ein Molekulargewicht von 3.000 bis 20.000 g/mol aufweist und der Polycarbonatblock ein Molekulargewicht von 15.000 bis 27.000 g/mol aufweisen.

**9.** Verfahren zur Herstellung eines Mehrschichtverbundwerkstoffs gemäß einem der Ansprüche 1 bis 8, umfassend folgende Schritte:

a) Bereitstellen mindestens einer innenliegender Lage Faserverbundwerkstoff und zweier außenliegender Lagen Faserverbundwerkstoff, wobei die Herstellung der einzelnen Faserverbundwerkstofflagen durch Auftragen eines geschmolzenen Siloxanhaltigen Blockcokondensat basierenden Thermoplasten auf ein über die Glasübergangstemperatur des Siloxanhaltigen Blockcokondensat basierenden Thermoplasten vorgeheiztes Roh-Faserband, wobei das Auftragen unter Druck-Scher-Vibrationsbeaufschlagung erfolgt,
b) Einlegen der mindestens einen innenliegenden Lage Faserverbundwerkstoff zwischen die außenliegenden Faserverbundwerkstofflagen, wobei die innenliegenden Lagen Faserverbundwerkstoff gleich orientiert sind und ihre Orientierung relativ zu den außenliegenden Lagen Faserverbundwerkstoff um 30° bis 90° rotiert ist,
c) Verbinden der geschichteten Lagen Faserverbundwerkstoff, insbesondere mittels Druck und Temperatur, zum Mehrschichtverbundwerkstoff.

**10.** Gehäuseteil oder Bauteil erhältlich aus einem Faserverbundwerkstoff oder Mehrschichtverbundwerkstoff gemäß einem der Ansprüche 1 bis 9.

## Claims

**1.** Fibre composite material comprising at least one layer of fibre material, wherein the fibre materials are selected from glass fibres and/or carbon fibres as endless fibres or in the form of weaves and knits, embedded into a thermoplastic based on siloxane-containing block cocondensate and containing a structural unit (1)

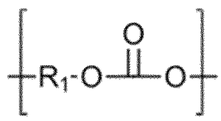

(1)

where $R_1$ is a divalent substituted or unsubstituted aromatic radical, a divalent linear or cyclic aliphatic radical, or the structural unit (1) is a mixture of units, where $R_1$ is a divalent substituted or unsubstituted aromatic radical and/or $R_1$ is a divalent linear or cyclic aliphatic radical,
and a siloxane block that derives from a hydroxyarylterminated polysiloxane having the following structure (10)

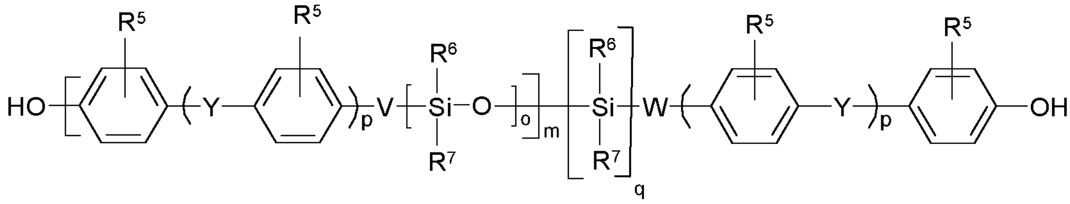

(10)

where

$R^5$ is hydrogen or methyl,
$R^6$ and $R^7$ are independently methyl,
V is a single bond, O, C1- to C6-alkyl or C1- to C6-alkoxy,
W is a single bond, C1- to C6-alkylene, C2- to C5-alkylidene or C1- to C6-alkoxy,
Y is a single bond, —CO—, —O—, C1- to C6-alkylene, C2- to C5-alkylidene, a C5- to C6-cycloalkylidene radical which may be mono- or polysubstituted by C1 to C4-alkyl, or C6- to C12-arylene which may be fused to a further aromatic ring containing heteroatoms,
m is an average number of repeat units from 2 to 6, o is an average number of repeat units from 10 to 400, and p and q are each 0 or 1,

where the content of siloxane blocks in the siloxane-containing block cocondensate is 0.5% to 40% by weight, based on the siloxane blocks and polycarbonate blocks used.

**2.** Multilayer composite material comprising at least two and preferably at least three mutually superposed layers of fibre composite material according to Claim 1, wherein, in the case of three composite material layers, these are defined relative to one another as two outer layers of fibre composite material and at least one inner layer of fibre composite material, wherein, in the case of endless fibres as fibre material, these are aligned unidirectionally in the respective layer.

**3.** Multilayer composite material according to Claim 2, wherein the inner layers of fibre composite material have substantially the same orientation and the orientation thereof is rotated by 30° to 90° relative to the outer layers of fibre composite material, wherein the orientation of one layer of fibre composite material is determined by the orientation of the unidirectionally aligned fibres present therein.

**4.** Multilayer composite material according to Claim 2, wherein at least some of the layers have the same orientation and at least some other layers are rotated by 30° to 90° and the outer layers are in a 0° orientation relative thereto.

**5.** Multilayer composite material according to Claim 2, wherein the inner layers have the same orientation and the orientation thereof is rotated by 30° to 90° relative to the outer layers of fibre composite material.

**6.** Multilayer composite material according to any of Claims 1 to 5, wherein the fibre volume content of the outer layers of fibre composite material is not more than 50% by volume, based on the volume of the outer layers of fibre composite material.

**7.** Fibre composite material or multilayer composite material according to any of Claims 1 to 6, where $R_1$ in the structural unit (1) is derived from dihydroxyaryl compounds of the formula (3)

$$HO-Z-OH \qquad (3)$$

in which
Z is a radical of formula (3a)

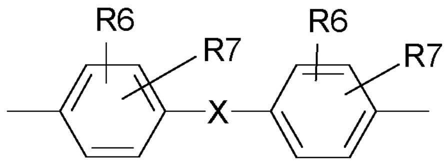

(3a)

in which

R6 and R7 are independently hydrogen, C1-C18-alkyl, C1-C18-alkoxy, halogen or in each case optionally substituted aryl or aralkyl, and
X is —CO— , —O— , —S—, C1- to C6-alkylene, C2- to C5-alkylidene, C6- to C10-cycloalkylidene or C6- to C12-arylene which may optionally be fused to further aromatic rings containing heteroatoms.

**8.** Fibre composite material or multilayer composite material according to any of Claims 1 to 7, wherein, for the construction of the siloxane-containing block cocondensate, the siloxane block has a molecular weight of 3000 to 20 000 g/mol and the polycarbonate block has a molecular weight of 15 000 to 27 000 g/mol.

**9.** Process for producing a multilayer composite material according to any of Claims 1 to 8, comprising the following steps:

a) providing at least one inner layer of fibre composite material and two outer layers of fibre composite material, wherein the individual fibre composite material layers are produced by applying a molten siloxane-containing block cocondensate-based thermoplastic to a raw fibre belt preheated above the glass transition temperature of the siloxane-containing block cocondensate-based thermoplastic, with application under pressure-shear vibration,
b) inserting the at least one inner layer of fibre composite material between the outer fibre composite material layers, the inner layers of fibre composite material having the same orientation and the orientation thereof being rotated by 30° to 90° relative to the outer layers of fibre composite material,
c) bonding the layered layers of fibre composite material, especially by means of pressure and temperature, to give the multilayer composite material.

**10.** Housing part or component obtainable from a fibre composite material or multilayer composite material according to any of Claims 1 to 9.

**Revendications**

**1.** Matériau composite fibreux, comprenant au moins une couche de matériau fibreux, les matériaux fibreux étant choisis parmi les fibres de verre et/ou les fibres de carbone sous forme de fibres continues ou sous forme de tissu et de tricot, incorporés dans un thermoplastique basé sur un produit de cocondensation à blocs contenant siloxane, contenant un motif structural (1)

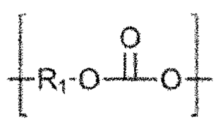

(1),

dans lequel $R_1$ signifie un radical aromatique divalent substitué ou non substitué, un radical aliphatique divalent linéaire ou cyclique, ou le motif structural (1) est un mélange d'éléments, $R_1$ représentant un radical aromatique divalent substitué ou non substitué et/ou R1 représentant un radical aliphatique divalent linéaire ou cyclique
et un bloc siloxane qui est dérivé d'un polysiloxane terminé par hydroxyaryle présentant la structure (10) suivante

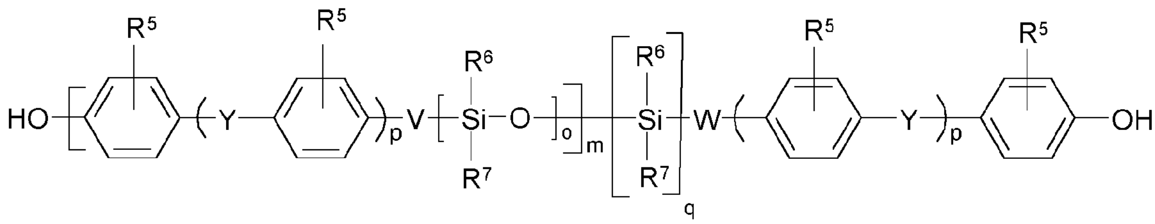

(10),

dans laquelle

$R^5$ représente hydrogène ou méthyle,
$R^6$ et $R^7$ représentent, indépendamment, méthyle,
V représente une simple liaison, 0, C1-C6-alkylène ou C1-C6-alcoxy,
W représente une simple liaison, C1-C6-alkylène, C2-C5-alkylidène ou C5-C6-alcoxy,
Y représente une simple liaison, —CO—, -O-, C1-C6-alkylène, C2-C5-alkylidène, un radical C5-C6-cycloalkylidène qui peut être monosubstitué ou polysubstitué par C1-C4-alkyle ou un radical C6-C12-arylène, qui peut être condensé avec un autre cycle aromatique contenant des hétéroatomes,
m représente un nombre moyen de motifs récurrents de 2 à 6,
o représente un nombre moyen de motifs récurrents de 10 à 400 et
p et q représentent à chaque fois 0 ou 1,

la teneur en blocs siloxane dans le produit de cocondensation à blocs contenant siloxane étant de 0,5 à 40% en poids par rapport aux blocs siloxane et aux blocs polycarbonate utilisés.

2. Matériau composite multicouche, qui comprend au moins deux, de préférence au moins trois, couches superposées de matériau composite fibreux selon la revendication 1, où, dans le cas de trois couches de matériau composite, celles-ci sont définies les unes par rapport aux autres par deux couches externes de matériau composite fibreux et par au moins une couche interne de matériau composite fibreux, où, dans le cas de fibres continues comme matériau fibreux, celles-ci sont orientées de manière unidirectionnelle dans la couche respective.

3. Matériau composite multicouche selon la revendication 2, les couches internes de matériau composite fibreux étant orientées de manière sensiblement identique et leur orientation étant tournée de 30° à 90° par rapport à celle des couches externes de matériau composite fibreux, l'orientation d'une couche de matériau composite fibreux étant déterminée par l'orientation des fibres orientées de manière unidirectionnelle qui y sont contenues.

4. Matériau composite multicouche selon la revendication 2, au moins une partie des couches présentant la même orientation et au moins une autre partie des couches étant tournée de 30° à 90° et les couches externes se trouvant dans une orientation de 0° par rapport à celles-ci.

5. Matériau composite multicouche selon la revendication 2, les couches internes présentant la même orientation et leur orientation étant tournée de 30° à 90° par rapport à celle des couches externes de matériau composite fibreux.

6. Matériau composite multicouche selon l'une quelconque des revendications 1 à 5, la teneur volumique en fibres des couches externes de matériau composite fibreux représentant au plus 50% en volume par rapport au volume des couches externes de matériau composite fibreux.

7. Matériau composite fibreux ou matériau composite multicouche selon l'une quelconque des revendications 1 à 6, $R_1$ du motif structural (1) étant dérivé de composés dihydroxyaryle de formule (3)

$$HO-Z-OH \qquad (3)$$

dans laquelle
Z représente un radical de formule (3a)

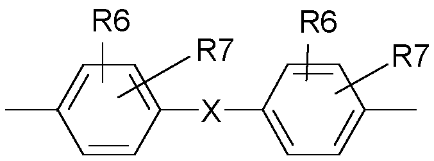

(3a)

dans laquelle

$R^6$ et $R^7$ représentent, indépendamment l'un de l'autre, hydrogène, C1-C18-alkyle, C1-C18-alcoxy, halogène ; ou aryle ou aralkyle à chaque fois le cas échéant substitué et
X représente —CO—, —O—, —S—, C1-C6-alkylène, C2-C5-alkylidène, C6-C10-cycloalkylidène ; ou C6-C12-arylène, qui peut le cas échéant être condensé avec d'autres cycles aromatiques contenant des hétéroatomes.

**8.** Matériau composite fibreux ou matériau composite multicouche selon l'une quelconque des revendications 1 à 7, le bloc siloxane pour la construction du produit de cocondensation à blocs contenant siloxane présentant un poids moléculaire de 3000 à 20.000 g/mole et le bloc polycarbonate présentant un poids moléculaire de 15.000 à 27.000 g/mole.

**9.** Procédé pour la fabrication d'un matériau composite multicouche selon l'une quelconque des revendications 1 à 8, comprenant les étapes suivantes :

a) mise à disposition d'au moins une couche interne de matériau composite fibreux et de deux couches externes de matériau composite fibreux, la fabrication des couches individuelles de matériau composite fibreux ayant lieu par application d'un thermoplastique fondu basé sur un produit de cocondensation à blocs contenant siloxane sur une bande fibreuse brute préchauffée au-dessus de la température de transition vitreuse du thermoplastique basé sur un produit de cocondensation à blocs contenant siloxane, l'application ayant lieu sous une sollicitation par pression-vibration à cisaillement,
b) insertion de ladite au moins une couche interne de matériau composite multicouche entre les couches externes de matériau composite fibreux, les couches internes de matériau composite fibreux étant orientées de la même manière et leur orientation étant tournée de 30° à 90° par rapport à l'orientation des couches externes de matériau composite fibreux,
c) assemblage des couches stratifiées de matériau composite fibreux, en particulier par pression et température, en matériau composite multicouche.

**10.** Partie de boîtier ou élément pouvant être obtenu à partir d'un matériau composite fibreux ou d'un matériau composite multicouche selon l'une quelconque des revendications 1 à 9.

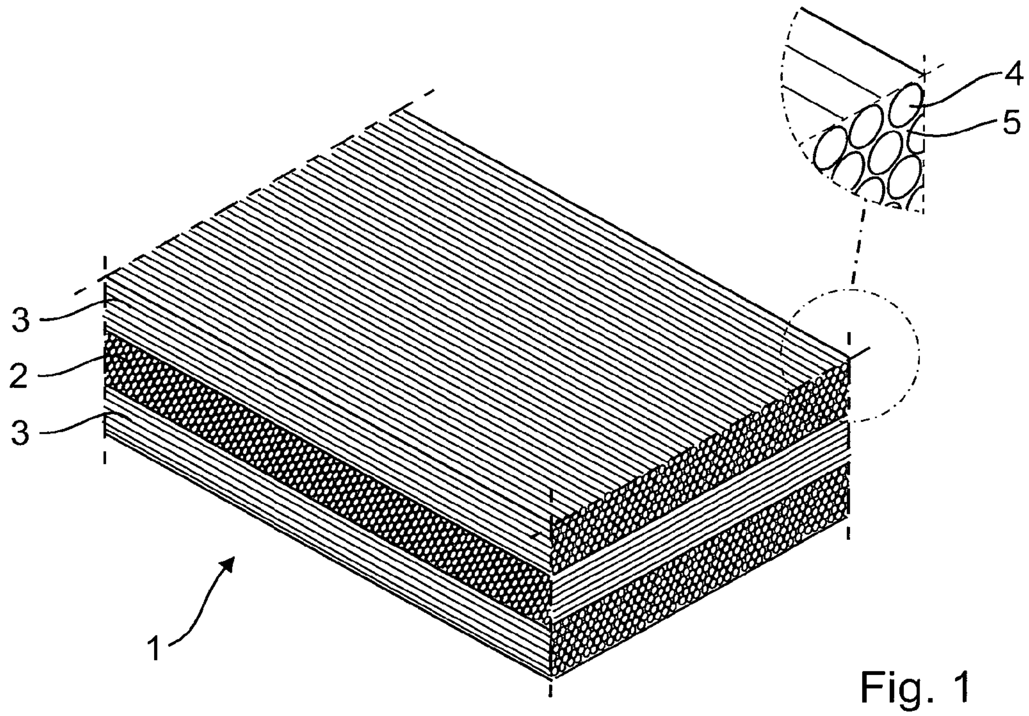


Fig. 1

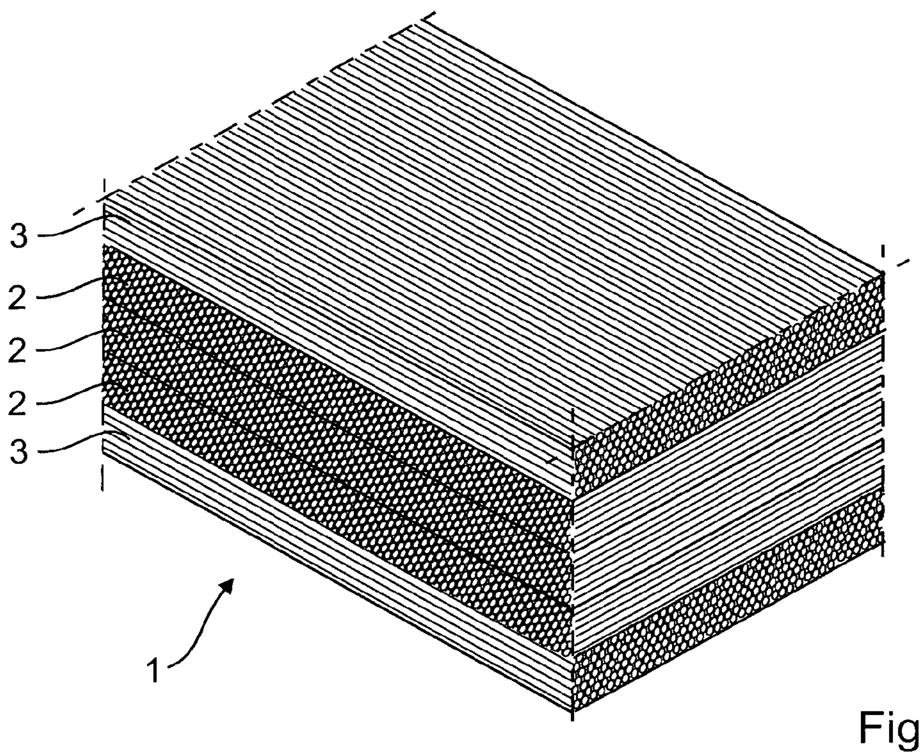


Fig. 2

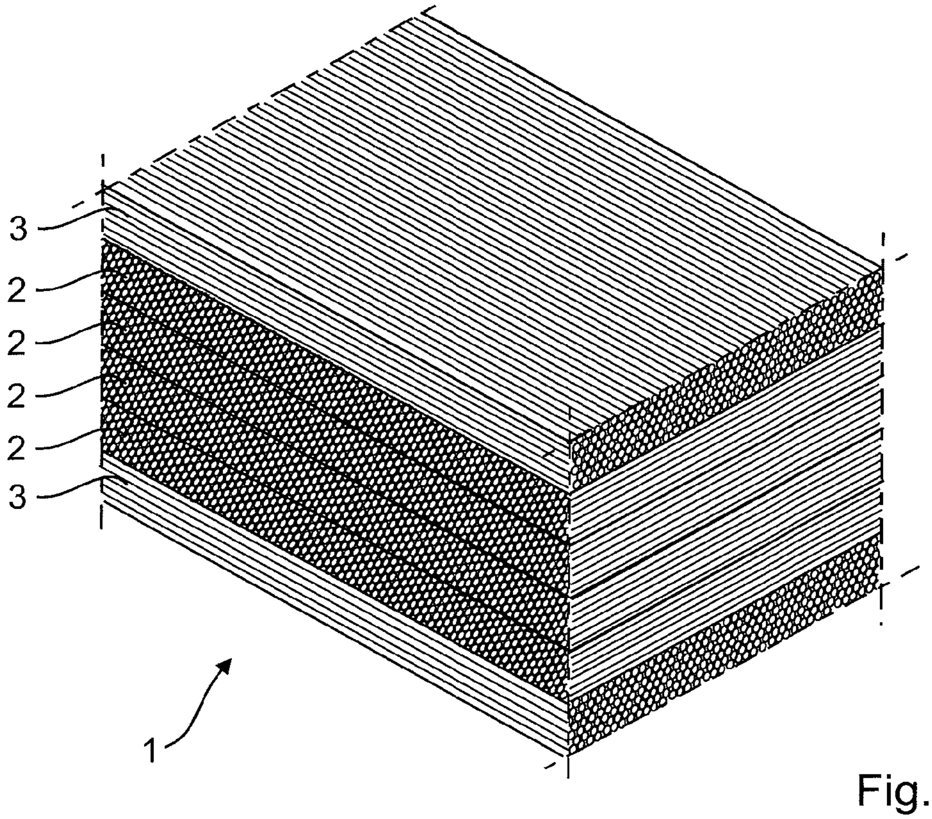


Fig. 3a

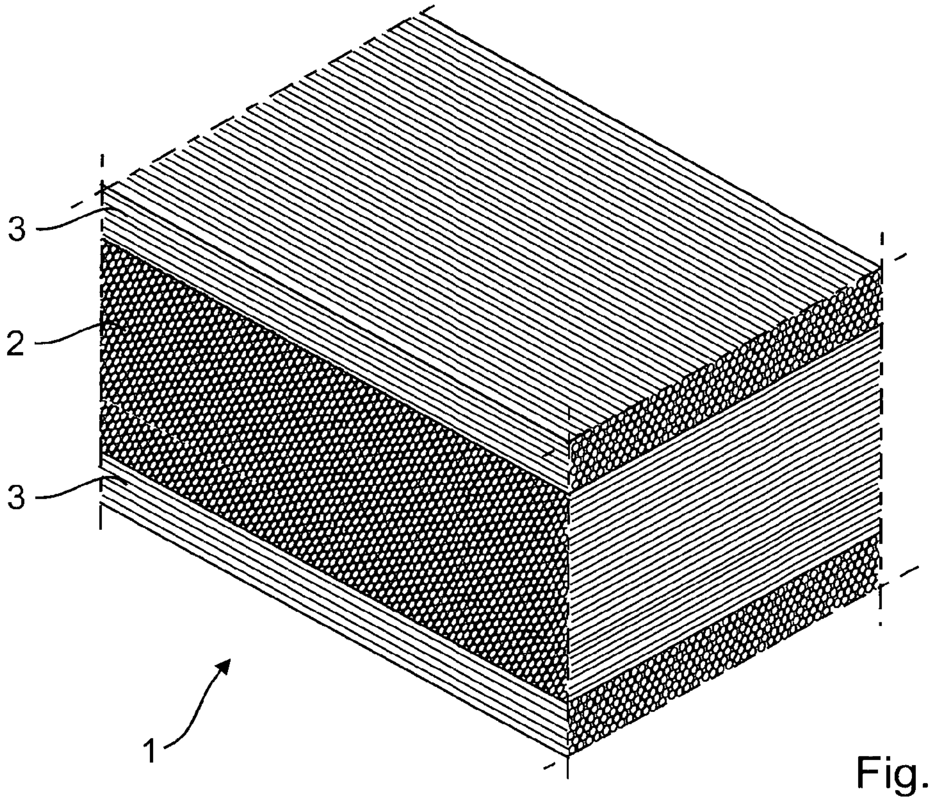


Fig. 3b

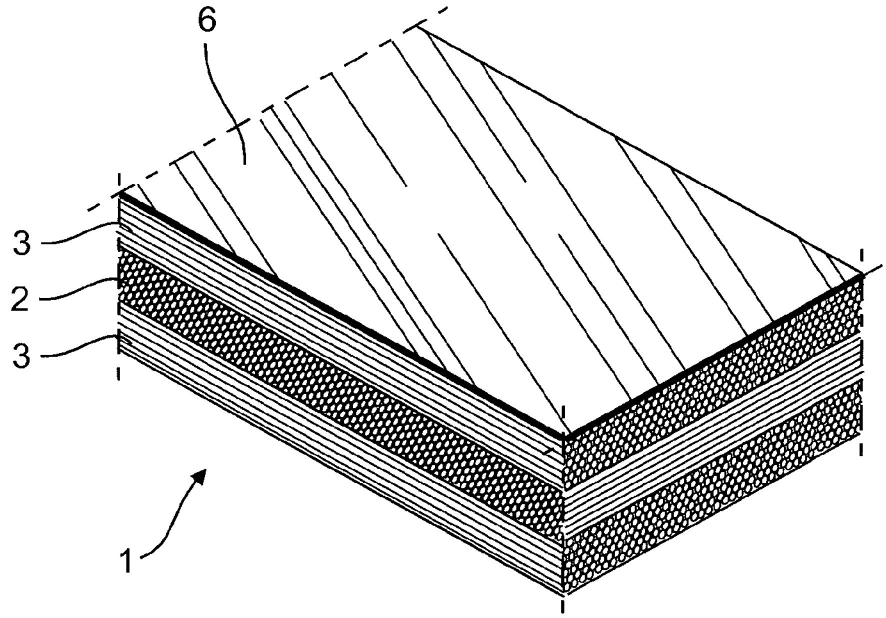


Fig. 4a

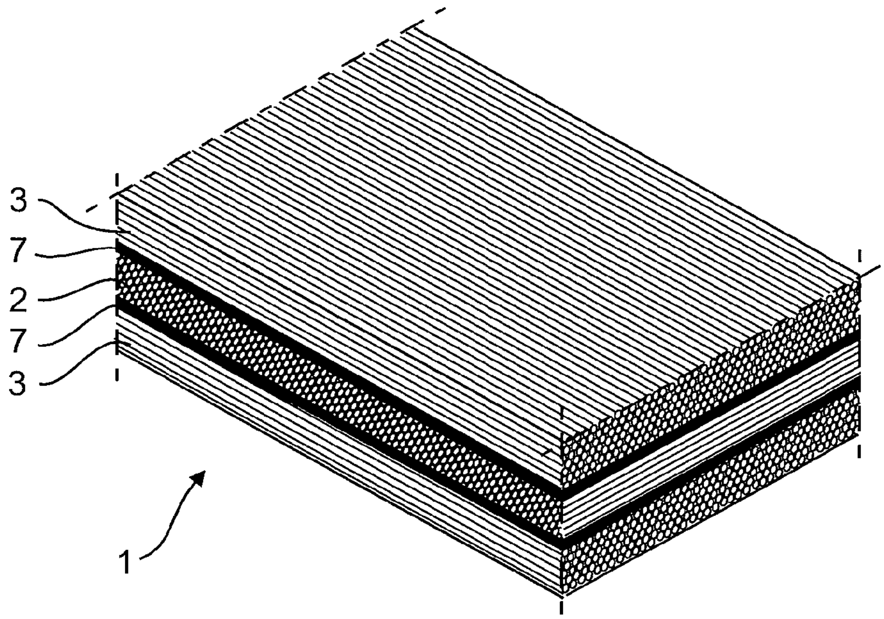


Fig. 4b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20150197633 A
- US 20150197632 A
- WO 2013170452 A
- WO 2015114427 A
- EP 2886305 A
- WO 2015052114 A1
- WO 2012126910 A
- WO 2011163365 A
- US 2011020572 A
- US 2014018491 A
- US 20130267665 A
- WO 2004063249 A1
- WO 200105866 A1
- WO 2000105867 A
- US 5340905 A
- US 5097002 A
- US 5717057 A
- EP 0517044 A
- US 3821325 A
- WO 2015052110 A
- EP 0839623 A
- WO 9615102 A
- EP 0500496 A
- EP 1308084 A1
- DE 102007011069 A1
- DE 10311063 A1
- DE 102011005462 B3
- DE 102008019503
- WO 2015052110 A1
- EP 460466 A


### In der Beschreibung aufgeführte Nicht-Patentliteratur


- Impact resistance of fibrous glass reinforced plastics using polycarbonate-polydimethylsiloxane block copolymer. JOURNAL OF APPLIED POLYMER SCIENCE. ©2002WILEYPERIODICALS,INC, 05. Februar 2002, vol. 86, 1123-1127
- **H. SCHNELL.** Chemistry and Physics of Polycarbonates. Interscience Publishers, 1964, 28, , 102
- **D. G. LEGRAND ; J. T. BENDLER.** Handbook of Polycarbonate Science and Technology. Marcel Dekker, 2000, 72 ff
- Chemistry and Physics of Polycarbonates. Polymer Reviews. Interscience Publishers, 1964, vol. 9
- Polycarbonates. **D. FREITAG ; U. GRIGO ; P.R. MÜLLER ; H. NOUVERTNE ; BAYER AG.** Encyclopedia of Polymer Science
- *Engineering,* 1988, vol. 11, 648-718
- Polycarbonate. **U. GRIGO ; K. KIRCHNER ; P.R. MÜLLER.** Becker/Braun, Kunststoff-Handbuch, Band 3/1, Polycarbonate, Polyacetale, Polyester, Celluloseester. Carl Hanser Verlag München, 1992, vol. 3/1, 117-299
- Chemistry and Physics of Polycarbonates. **H. SCHNELL.** Polymer Reviews. Interscience Publishers, 1964, vol. 9, 33 ff
- Condensation Polymers by Interfacial and Solution Methods. **PAUL W. MORGAN.** Polymer Reviews. Interscience Publishers, 1965, vol. 10, 325
- Polycarbonate. **U. GRIGO ; K. KIRCHER ; P. R-MÜLLER.** Becker/Braun, Kunststoff-Handbuch, Band 3/1, Polycarbonate, Polyacetale, Polyester, Celluloseester. Carl Hanser Verlag, 1992, vol. 3 /1, 118-145
- **HANS ZWEIFEL.** Plastics Additives Handbook. Hanser Verlag, 2000
- *CHEMICAL ABSTRACTS,* 6683-19-8